# EUROPEAN PATENT SPECIFICATION

(11) **EP 1 142 337 B1**
(45) Date of publication and mention of the grant of the patent: **07.01.2004**
(21) Application number: 99962444.8
(22) Date of filing: 23.12.1999
(51) Int. Cl.: H04N 7/173

(54) **AUTOMATIC ELECTRONIC PROGRAMME SCHEDULING SYSTEM**
AUTOMATISCHES-ELEKTRONISCHES-PROGRAMMABLAUF-SYSTEM
SYSTEME DE PLANIFICATION AUTOMATIQUE ELECTRONIQUE DE PROGRAMMES

(30) Priority: 23.12.1998 GB 9828589
(43) Date of publication of application: 10.10.2001
(60) Divisional application: 03025066.6
(73) Proprietor: NTL Group Limited, Hook, Hampshire RG27 9UP (GB)
(72) Inventor: LANG, Jack Arnold, Hook Hampshire RG27 9UP (GB); STRICK, Michael, Hook Hampshire RG27 9UP (GB)
(74) Representative: Martin, Philip John
(86) International application number: PCT/GB1999/004408
(87) International publication number: WO 2000/040026

(56) References cited:
- EP-A- 0 721 253
- EP-A- 0 852 443
- WO-A-97/49242
- US-A- 5 418 782
- US-A- 5 479 268
- US-A- 5 721 829
- US-A- 5 844 620
- PATENT ABSTRACTS OF JAPAN vol. 1998, no. 06, 30 April 1998 (1998-04-30) & JP 10 042239 A (MATSUSHITA ELECTRIC IND CO LTD), 13 February 1998 (1998-02-13)

## Description

The present invention generally relates to systems for the management of programmes for home entertainment devices such as televisions. More particularly it is concerned with apparatus, methods and software for automatically scheduling such programmes.

Until recently conventional televisions have been able to receive only a relatively limited number of channels of programmes. Typically terrestrial television broadcasting has provided 4 or 5 channels, satellite broadcasting of the order of a dozen channels and cable television broadcasting a few tens of channels. With the advent of new forms of programme delivery such as digital terrestrial television (DTT), digital satellite television, web casting - delivery of programmes over the Internet - video-on-demand (VOD) and near video-on-demand (NVOD) the number of available television channels is predicted to grow dramatically. Consumers will be able to choose from many thousands of programmes or programme clips, which could include daily video magazines, regularly updated news from hundreds of sources around the globe, music tracks and videos, games and films. Newer PC-TVs and set-top-boxes (STBs) have the ability to store programmes on an internal hard disk for viewing later and to access web-cast video over the Internet, as well as having the capability to receive many hundreds of channels of broadcast material and NVOD movies. Thus consumers will be faced with an overwhelming choice of viewing.

Television viewers exhibit both "push" and "pull" behaviour. In push behaviour a passive viewer selects a channel, typically by editorial style much as one might choose a newspaper, and is essentially passive thereafter. Pull behaviour is where a viewer deliberately chooses or "pulls" a desired programme, for example a video, soap, sporting fixture or well-advertised/trailed programme. Viewers may even pay for such material. However, in both cases the viewer is making a choice from a small number of alternatives. When the choice becomes too great the viewer easily becomes confused and will typically ignore much of the material on offer by restricting viewing to a few familiar channels.

An electronic programme guide (EPG) is, generally speaking, an application resident on a set top box designed to aid the viewer in the navigation of and selection from broadcast material available in a digital TV environment. Conventional electronic programme guides (EPGs) are of little assistance when the number of channels or viewable entries becomes large. The choices available to a viewer become too many to fit on a single page or on few enough screens to be understandable. Channel surfing is also difficult because of the difficulty in remembering what is being broadcast on the sampled channels. With 500 channels, it would take 83 minutes to glance at each channel, allowing 10 seconds per channel.

EP-A-0 774 866 describes apparatus for searching for specific television programmes which satisfy certain criteria concerning the user's viewing preferences and for generating a list of such programmes in order to predict for the viewer certain programmes which may be of interest; it does not, however, generate a single, time-based schedule of suggested programmes. US 5,867,205 describes a method and apparatus for controlling video/audio and channel selection for a communication signal based on textual information indicative of channel contents of a signal. A signal processing unit determines whether channel contents are amongst contents defined by section data but no personal channel schedule is generated. WO 96/17467 describes a system and method for scheduling broadcast of and access to video programmes and other data using customer profiles. An agreement matrix enables the system to present to the customer a subset of the programmes available at a particular point in time. The "virtual channels" of '467 are generated either at a video head-end or in a set top multi media terminal. There is no means to download a "virtual channel" schedule from the head end to the customer's set top terminal and the system further requires the use of an expert panel to classify programmes and source channels. US 5,534,911 describes a television system in which, when a customer selects a virtual channel, a computer switches a video receiver to a physical channel on which a programme of having the best evaluation is transmitted. However, there is no attempt to create a personal channel schedule.

The various aspects of the present invention are aimed at alleviating these problems by providing a more intelligent "electronic programme guide" which incorporates a concept of a personal channel, with automatic programme scheduling to assist in choosing between sources of programming.

According to the present invention there is provided apparatus and a corresponding method, for providing an entertainment device with a personal channel, the apparatus comprising: database interface means to communicate with a programme database comprising programme information for a plurality of programmes; input means, to receive preference information characterising an individual user's preferred programmes; automatic scheduling means coupled to the database interface means to receive the programme information, to operate on the preference information and programme descriptor information to automatically generate schedule information for a personal channel for the user; control means to control a programme reception device to receive programmes identified by the personal channel schedule; and output means to provide schedules programmes thus received to the home entertainment device. The personal channel comprises a schedule of programmes and corresponding start times, the programmes being selected from programmes available on a plurality of real channels and/or other programme sources, the personal channel being selectable by a user of the home entertainment device in a similar way to a real programme channel; the programme database includes for each programme the programme start time, a real channel or other programme source the programme is available from at that start time, and programme descriptor information characterising the content of the programme; the schedule information comprises, for each schedule programme, programme start time information and information identifying a real channel or other programme source from which the programme is available at that start time; the control means controls the programme reception device using the personal channel schedule information to select and receive, at the scheduled start time, the real channel or programme source corresponding to the scheduled programme. The apparatus is characterised in that it further comprises a communication device and means coupled to the communication device to select and download preference information characterising a personal channel schedule of a user of other similar apparatus from a source remote from the apparatus.

A personal channel is essentially a series of programmes from diverse sources intended to be shown in succession, selected according to the viewer's preferences. More particularly, in one embodiment a virtual channel comprises a seamless schedule of material from any available broadcast channels, automatically selected for maximum relevance to a set of parameters defined by the viewer. The set top box automatically re-tunes to each broadcast channel as required, providing the effect of a single channel.

The virtual channel allows a user to generate a "personal" channel or channels comprising a sequence of programmes from multiple programme sources, chosen according to the user's taste or specifications. This helps to simplify the user's choices by changing emphasis from a broadcast model to a "personal channel model". It thus allows the user to choose between a small number of more attractive options.

The system may be configured to schedule a plurality of personal channels for the user. Thus a user could set up channels such as "My sport's channel", "My movie channel", "My gardening channel" and "My news channel", and "surf" between them as if they were broadcast channels. The system is preferably controllable to restrict selectable personal channels to those associated with a particular current user. As the user is identified, channel choice can also be restricted by parental or other control, for example to screen out programmes with violent or adult content. Preferably a portion of personal channel schedule is definable for replacement by a schedule of a broadcast television channel. This allows the personal channels to map to and include broadcast channels, by the use of suitable criteria, for example, "Programmes from BBC1".

Advantageously programmes for scheduling include NVOD video and programmes available via the Internet, that is web-cast stations. Preferably the system further comprises programme reception and storage means so that the programmes for scheduling can include stored programmes. This develops the basic concept of time-shifting programmes and provides further flexibility within the personal channel schedule. It also allows programmes which overlap in time to be scheduled.

The system is also preferably operable to download a personal channel schedule and/or parameters from a remote source. This allows download of, for example, an "Editor's recommendations" or "Critic's choice" channel. The system may also comprise means to suggest personal channel schedule in response to stored user characteristics. This allows the suggestion of personal channels likely to be of interest to the user, further simplifying choice. The system may be still further operable to communicate with remote users of other similar apparatus to allow at least a portion of a personal channel and/or schedule parameters to be transmitted or received. This allows personal channel descriptions to be read from and written to others, for example, via the Internet, so that they may be exchanged between friends.

The database preferably comprises, in addition to input from a normal programme information feed, Internet web-spider search means to retrieve programme schedule information from the Internet and add it to the database. This provides a convenient method of collecting and collating data from a wide variety of rapidly changing sources. There is also described a method of gathering information for the programme database comprising:
i) accessing a web page;
ii) storing the web page's uniform resource locator address;
iii) searching the web page for information identifying a programme suitable for scheduling on the virtual channel and, if found, retrieving virtual channel schedule information for the programme, and adding the virtual channel schedule information to the programme database;
iv) identifying a hypertext link from the web page to a new web page or, if none, returning to a previous web page until a link to a new Web page is found; and
v) accessing the new web page and repeating steps (ii) to (iv).

We further describe a method of building a personal channel schedule comprising
i) receiving user preference information characterising a user's preferred programmes;
ii) receiving programme descriptor information for broadcast programmes;
iii) scoring the broadcast programmes based on the user preference information and adding this to the schedule
iv) selecting a first programme using the results of the scoring and adding this to the schedule;
v) identifying either earlier adjoining programmes which start after the end of the first programme or later adjoining programmes which finish before the start of the first programme;
vi) scoring the adjoining programmes based on the user preference information;
vii) selecting a second programme from the adjoining programmes using the results of serving the adjoining programmes
viii) adding the second programme to the schedule; and
ix) repeating steps (v)-(viii) to build up the schedule.

Preferably a plurality of schedules is generated, preferably using different first programmes, and each scored to determine the best match to the user's preferences.
This helps avoid local minima in the search space caused by restricting to a particular first selected programme.

These and other aspects of the invention will now be described, by way of example only, with reference to the accompanying drawings in which:
Figure 1 shows a block diagram of a system according to an embodiment of the present invention;
Figure 2 conceptually illustrates the concept of a personal channel;
Figure 3 shows a simple example of an on-screen electronic programme guide for a virtual channel;
Figure 4 shows a relational database for storing programme data;
Figure 5 shows a simple example of a user interface for searching the database of Figure 4;
Figure 6 shows a block diagram of software modules for an electronic programme scheduling system;
Figure 7 shows, schematically, parts of a user interface.
Figure 8 shows a flowchart illustrating a method for providing a personal channel;
Figure 9 shows an algorithm for constructing a personal channel based on a user's preferences;
Figure 10 shows a multi-channel EPG view screen;
Figure 11 shows a channel preferences screen;
Figure 12 shows a user profile screen; and
Figure 13 shows a summary of the relationship between files of EPG system.

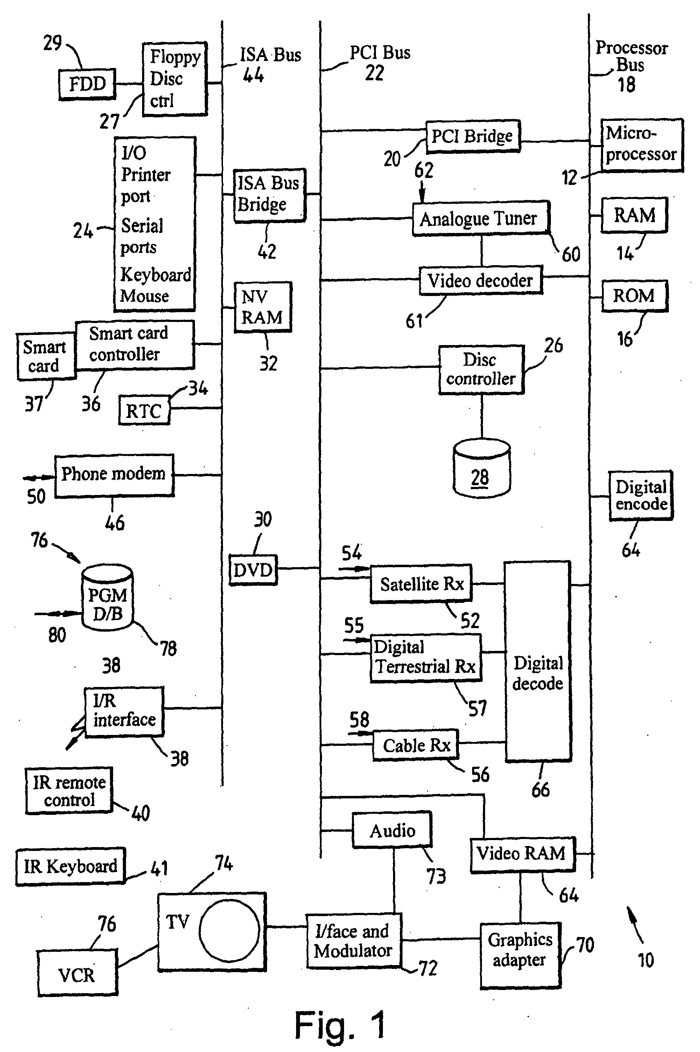

Figure 1 shows one example of a system which is suitable for providing a home entertainment device, such as a television, with a personal channel. Logically the system is located between a programme source such as a terrestrial television programme transmitter and a television receiver; physically it may be incorporated within a television set. In outline the system is based upon hardware corresponding to a conventional personal computer system with the addition of components for television programme reception and processing and modifications to enable the computer to be embedded in a conventional set top box (STB) with infrared remote control. Much of the functionality is provided by firmware stored in read only memory (ROM), although the program could be stored on hard disk, where the STB is so equipped, and executed from random access memory (RAM). The configuration of the computer system can be varied to suit the level of desired functionality. The illustrated system is suitable for a processor which performs multimedia operations (such as a Pentium with MMX) but a simpler microcontroller could be used and the basic functionality required of the system could even be provided by dedicated hardware. The skilled person will recognise that many variations to the illustrative hardware can be made according to cost, component availability, system functionality and other considerations. Although the system will be described as providing programmes to a television, it is suitable for use with any home entertainment device such as a VCR or DVD recorder and, in general, any programme receiving device.

In Figure 1 the set top box is generally illustrated at 10 and comprises a microprocessor 12 coupled to random access memory (RAM) 14, ROM 16 and peripheral component interconnect (PCI) bridge 20 by processor bus 18. ROM 16 holds system BIOS (Basic Input Output System) and operating software, the BIOS interfacing between the operating software and the STB hardware. If desired, the BIOS ROM can instead be coupled to the processor via the low speed ISA bus 44. PCI bus 22 is driven by PCI bridge 20 and is suitable for high speed data transfer although it is slower than processor bus 18. Optionally, hard/floppy disk controller 26 and disk drive 28, and digital versatile disk (DVD) drive and controller 30 are coupled to the processor via the PCI bus 22. To the ISA bus is attached non-volatile RAM 32 for storing, for example, user input information; real time clock 34; smart card interface 36 for smartcard 37 and infrared control link device 38. Commands are issued to the set top box by the user using a hand held infrared remote control unit 40 or infrared keyboard 41 which communicates with control link device 38.

Industry standard architecture (ISA) bus 44 is coupled to PCI bus 22 by ISA bus bridge 42. The system is preferably provided with means to receive television programmes from a variety of sources such as broadcast programmes from satellite, cable and conventional terrestrial transmitters, video or near-video-on-demand (both referred to as NVOD) sources, and Web cast programmes from Internet-based sources. However, a simplified system may lack such receiving means and may instead control the television to display a desired programme, for example by transmitting infrared commands to the transmitter as though it were the television's remote control device; in this case IR module 38 may also be an IR transceiver.

In Figure 1, conventional tuner 60 has input 62 coupled to a terrestrial television aerial to receive terrestrially broadcast programmes; cable television receiver 56 has input 58 coupled to a cable TV network; satellite receiver 52 has input 54 coupled to a satellite receiving dish; and digital terrestrial receiver 57 has input 55 from a suitable terrestrial aerial. Telephony modem 46, which may be a cable modem, or an International Subscriber Digital Network (ISDN) or an asymmetric digital subscriber line (ADSL) modem (or any suitable digital subscriber line device) is coupled to telephone line 50 to receive VOD/NVOD programmes. Digital programme receiving devices have their digital information stream output coupled to decode unit 66 (audio paths are not shown in Figure 1), which is also coupled to ISA bus 44 or PCI bus 22.

Television programmes may have associated data streams and the programme receiving means are therefore preferably provided with means to receive data and/or to extract data from received video signals which can, for example, be included in the vertical blanking interval (VBI) of a television signal. Since the ADSL connection provides a data channel, this can also be used for data communications. Such connections allow the system to handle data casting and to extract programme data such as broadcast channel identification information, time and date information and subtitles.

The apparatus is preferably configured to view programme video information and simultaneously browse the Web and carry out Web related activities, for example downloading software or information.

An audio and motion video compression module 64 is also coupled to bus 18 and may also be implemented in software. Data may be input to this to allow broadcast programmes to be recorded locally and made available for later viewing. The video data is compressed according to a standard format such as MPEG, Real Media or H323 and then stored as a compressed file on disk. Module 66 also includes corresponding decoding means to decompress the compressed video and audio. Optionally, the video compression and decompression can be performed by processor 12. The system is preferably operable to concurrently store a received programme and to play a stored programme by, for example, interleaving write and read-erase access cycles to the storage module's disk drive.

A video output carrying programme information, is coupled to the television via graphics adapter/video signal combiner 70 and modulator 72. If the television has a direct video input, modulator 72 may be omitted and the television 74 may be connected directly to video output via a SVGA socket, a SCART socket, S-Video socket, RCA phono plugs or other well known interfaces. Video RAM 70 is connected to the processor bus 18 and allows the system to generate graphics and combine them with the digital signal from video decode 66, for example using overlay or picture-in-picture modes, and can also output a video signal without any additional graphics. The system is configured to directly overlay text and/or graphics onto programme video and to achieve a similar result by overlaying a sparse Web page. This information can, for example, be used to provide further information about the programme or channel currently being viewed, for example information on "What's on next".

The system also includes an event detector module implemented in software to detect events in a programme video stream such as programme breaks within and/or between programmes. Such breaks or interruptions can be caused by commercial advertising or the interruption of other programmes for example news programmes. For example, in the U.K. a pair of vertical bars appears in the top right hand comer of the picture frame as a video switching mark shortly before a commercial break and the event detector is configurable to provide the video decode responsive to programme break detection. For digital transmissions, appropriate digital descriptor information is used to detect programme change.

Events can be determined by absolute and/or relative times, for example "at 10 p.m." or "five seconds after the start of the BMW advert (Registered Trade Mark)". Events, and the systems response to them, can be defined by extensions to HTML information associated with the relevant programmes. For example, in accordance with the recommendations of the Advanced Television Enhancement Forum (ATVEF) recommendations on proposed HTML extensions. The events and responses can also be transmitted in-band, for example in the VBI as a subtitle (the US EIA 746 standard) or in a digital video stream as a subtitle or as a separate event object in the data carousel, or even can be separately input via some other online connection.

The system is preferably equipped with bi-directional communications, so that information can be both received from and transmitted to remote apparatus. Thus cable receiving means 56, phone modem 46 are preferably all operable to transmit data as well as to receive programme and data information. Thus conventional Web-browser software in firmware may be employed to allow a user to interact with Web pages via the Internet, for example using IR remote control 40 to select hypertext links on Web pages displayed to the user by graphics adapter 70. Programme descriptor information can be displayed with selectable/clickable extensions and, more generally, Web-based electronic programme guide (EPG) information can be displayed. Although the operating system software has been described as being stored in ROM, it may be stored in non-volatile memory such as FLASH memory (EEPROM) whereby the system can be updated by downloading new software over one or other of the communication links, either when it becomes available or when a user pays to upgrade the system.

Also shown in Figure 1 is a database 76 remote from the set top box and comprising database storage means 78 and bi-directional communications link 80 for communication with the set top box (STB). Although shown remote from the apparatus, the programme database may be incorporated within the apparatus either in memory or on the local hard disk and generated from broadcast programme information. The database is provided with a software interface based on a standard protocol such as ODBC (Open Database Connectivity), for connection to other elements of the system. Again, although the database is illustratively shown as a unitary structure it could also comprise information held in a large number of disparate sources, for example electronic programme guides at various different Web page URL's. A further alternative is that the database is held remotely, as illustrated, with a copy of the database held locally in the set top box, for example, on disk or in the NVRAM and periodically updated by file transfer, for example, by telephone dial-up on demand or at a fixed time daily or by data insertion in the broadcast signal, for example overnight in in-band data such as VBI inserted data for analogue TV or as part of the data carousel for digital TV. Communication with the database can be by any conventional means, for example by phone modem 46 and/or a copy or partial copy of the database can be downloaded to the STB using the satellite 52, digital 57 and/or cable 56 receiver(s). The information held in the programme database is described in more detail below.

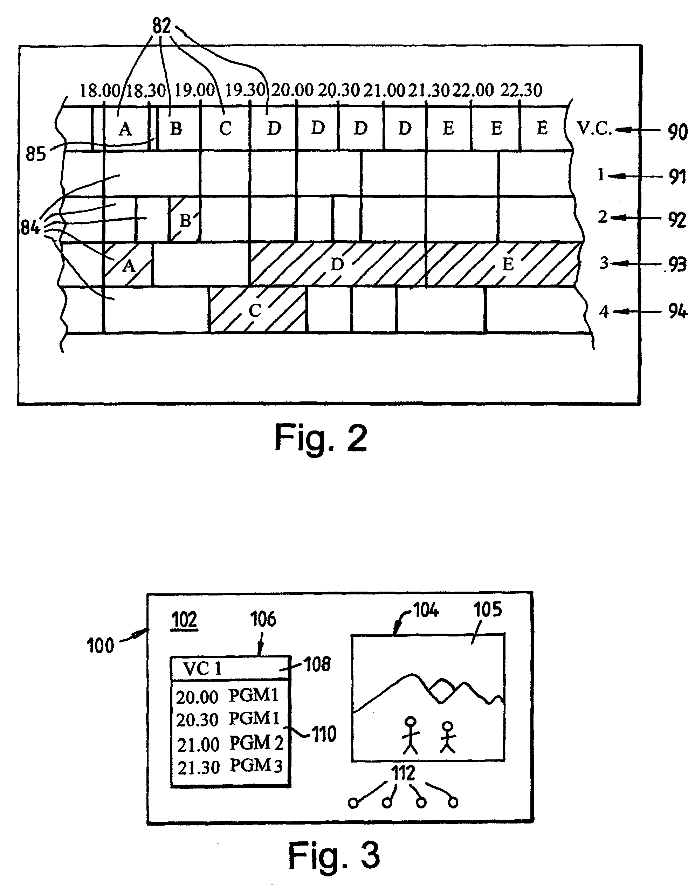

A personal channel is a schedule of programmes which have been selected from programmes available from real channels or other programme sources (for example, Webcast programmes). The schedule is made up by selecting programmes from a variety of channels for showing in, preferably, defined time slots in the personal channel. The concept of a personal channel is illustrated diagrammatically in Figure 2. Figure 2 shows a personal channel schedule 90 and schedules for four real channels, 91, 92, 93 and 94. The real "channels" may include cable, satellite, terrestrial and Web-cast television channels and NVOD programmes.

Illustratively the personal channel 90 has a template structure with notional divisions at half hour intervals defining half hour time slots 82 for programme scheduling. Time slots of other lengths can also be defined and, more generally, a flexible structure can be adopted in which the time slots are of varying length, preferably with start and end times corresponding to start and end times of programmes on a real channel(s).

The real channels have programmes 84 of variable start time and duration scheduled as shown. In the illustrated example, the personal channel schedule comprises five programmes, A, B, C, E and E during the interval 18:00 hours to 22:30 hours. Programme A is scheduled to occupy the slot from 18:00 hours 18:30 hours on the personal channel; it is available on real channel 93 during the same interval and therefore a system for providing the virtual channel must select programme information from channel 93 for output during this time period.

The second time slot in the personal channel begins at 18:30 hours and programme B, available on channel 92, is schedule for this time slot. Programme B ends at 19:00 hours, which corresponds with the end of the time slot on the personal channel, but it starts after 18:30 hours, leaving a gap 85 in the personal channel schedule. This gap may be filled either by programme material from channel 93 following programme A or by programme material from channel 92 preceding programme B, or by a supplementary programme material. Such supplementary material may comprise advertising from a standard source, material from a source defined by the personal channel schedule information, or material from a source automatically chosen by the system according to available information (such as information describing the programmes in the personal channel schedule or information describing or characterising a system user or user preferences). It may include material previously recorded on a local storage device. Since, by definition, VOD programmes are effectively available on-demand, gaps and overlaps in the personal channel schedule can be adjusted by adjusting the start time of VOD programmes in the schedule.

Programme C from channel 94 is scheduled for the third illustrated half-hour time slot on the personal channel, and programme D from channel 93 is scheduled for the following four time slots. It can be seen that programmes C and D overlap and, in the illustrated example, programme D has taken priority over programme C in the personal channel schedule. Programme overlaps can be handled either by manually choosing which programme takes priority, or by pre-programmed rules. For example, the earlier or the later programme may always take precedence or rules can depend upon programmer related information such as programme genre which allows rules such as "movies take priority over news" to be defined. In a preferred embodiment the system has a basic set of in-built rules which can be modified by the user.

As described above, when the set top box includes means to receive more than one programme at once and when it includes motion video storage means, overlapping programmes such as C and D may be scheduled at different times or to run consecutively. For example, programme C could be scheduled for both slots between 19:00 hours and 20:00 hours then, whilst, from 19:30 onwards C is being provided to the television, the initial half hour of D is recorded, and then after 20:00 hours the initial part of D is output to the television whilst the later part of D is concurrently recorded. This concurrent playback and recording is continued to move the end of programme D and the start of programme E to approximately 22:00 hours. The system is operable in a similar way to prevent a personal channel schedule being disrupted by a programme which is broadcast at a later time (or an earlier time) than that at which it is initially described as being available. The actual broadcast time of a programme can be determined by video stream events and/or from data downloaded by the system and by concurrent recording and playback the whole schedule can be shifted back in time until a suitable gap or lower priority programme is encountered.

If desired, more than one consecutive programme from a real channel can be scheduled on the personal channel, and in this case it is convenient to provide means whereby a user can map a portion of personal channel 90 to a corresponding portion of a real channel. It is preferably also possible to fully map the personal channel to a real channel so that, for example, personal channel 90 may be defined as identical to real channel 93.

Although the scheduled entities have been referred to as programmes (audio, video or multimedia), other similar entities such as computer games, computer based learning activities and interactive telecommunication events may also be scheduled.

The information defining a personal channel schedule comprises, at its most basic, an ordered list of programme entities. Associated with each entity is information specifying a real channel or other programme source, including other personal channels. from which the channel entity is available. Preferably the personal channel schedule information comprises, for each scheduled programme, information identifying the start time of the programme as well as information identifying a real channel on which the programme is available at that start time. Programme duration information may also be included. In the case of NVOD programmes the "real channel" information comprises NVOD programme source information.

The operating software in the ROM 16 of the set top box uses information defining the personal channel schedule to control the set box top to provide the set scheduled programmes to output 74 to the television at the correct times. At a programme start time processor 12 selects the appropriate programme input means and real channel and logically couples the video stream to output 67 or the video switch and thence to the output 74 of the set top box. The video output is provided to the television so that the output video stream can be selected in the same way that other real channels on television are selected. In one embodiment the modulator 72 provides a UHF radio frequency output to the television and when the television is tuned to this frequency the programmes scheduled on the personal channel are provided so that to a user the personal channel is selectable so that it appears to another real channel.

Figure 3 shows a simple exemplary screen display 100 presented to the television user when the virtual channel is selected. The display comprises a background region 102, which may be plain or which may include logos and/or advertising material, and a picture-in-picture region 104 in which a currently selected video stream 105 is displayed. A programme information region 106 is provided with a header bar 108 identifying the currently selected virtual channel and a programme guide region 110 displaying a list of programmes and times. Predefined or soft menu buttons 112 are also provided for control of, *inter alia*, scheduling and electronic programme guide functions.

Screen display 100 may be downloaded as a Web page or may comprise locally generated graphics or may be a combination of these; if display 100 is a Web page, screen regions such as menu buttons 112 may include hypertext links to other Web pages. In a preferred embodiment, selecting region 108, for example by clicking on the region with a pointer, displays a list of channels including real and virtual channels; selecting region 110 changes the display of programme information, displaying programmes at other times and/or further information on a selected programme; and selecting region 105 expands the video to fill the screen.

The system includes input means to receive information, as described above, defining the personal channel schedule. In a simple system, the input means comprises a communications device such as phone modem 46 or cable receiver 56 together with a software driver operating together to allow a schedule to be downloaded from a remote location such as a critic's choice Web page thus a user could, for example, download a newspaper's recommended choice of viewing for the evening. Smart card interface module 36 can similarly be used to load personal channel schedules from a user's or a published Smart card (i.e. a card incorporating a silicon chip data storage module).

The operating software includes software to allow a user to define a personal channel schedule. For this mode of operation the system includes an interface means (hardware and/or software) to communicate with the programme database, as outlined above. To allow user scheduling of programmes the database must include programme time and channel information needed to construct the personal channel schedule as well as information identifying the programmes to be scheduled, for example programme titles.

The database may be held locally or remotely from the apparatus, for example at a regional head-end delivery point. In cable systems with a permanent connection normal remote access protocols can be used to download the data via some out-of-band data path, for example using a cable modem. Alternatively, both a local and a remote database can be used, with the local database as a mirror of the remote master database.

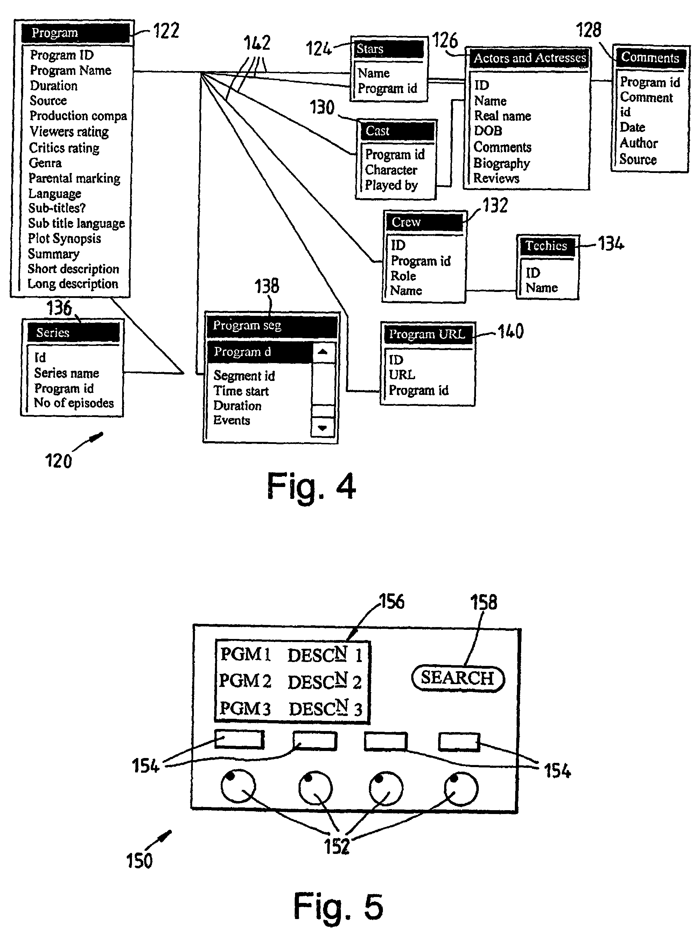

To allow the user to make an informed choice of programmes for scheduling the database preferably also comprises programme descriptor information characterising the content of the programmes in the database so that the user can search the database for programmes of a desired type or having specific features. Figure 4 shows an example schema 120 for a relational programme database. Associated with each programme in a "programme" table 122 are programme I.D., programme name, duration, source, production company, viewer's rating, critic's rating, genre, parental marking (age suitability/certification; violence or bad language; religion; nudity) language, indication of the presence of sub-titles, sub-title language, plot synopsis, summary, short description, long description, and other fields such as producer and director can also be included. Other illustrative linked tables include "stars" 124, "actors and actresses" 126, "comments" 128, "cast" 130, "crew" 132, "techies 134", "series 136", "programme segment" 138, "programme, and URLs" 140 (identifying, for example, an NVOD programme source). The links 142 between the tables in the relational database indicate which tables share data.

The data can be manually entered into the database or derived from a standard electronic programme guide feed or retrieved from broadcasters' or other Web pages using Web-spider search techniques or can be derived from a combination of these sources. If a Web-spider search engine is used, it is desirable that the EPG data to be collected by the Web-spider is published in a standard format so that the information corresponding to the various fields in the database can easily be located.

In an exemplary embodiment the Web-spider (which is essentially a software module) begins at a starting Web page, which may be predefined or manually entered. This page is searched for programme information for the database and for hypertext links to other Web pages, preferably using key words to identify the potentially most useful links. The search engine then either follows a single link to a new Web page where again electronic programme guide data and further hypertext links are gathered, or the software creates two or more separate tasks to follow a plurality of hypertext links simultaneously. In this way EPG data is gathered as the search engine works its way through a tree of hypertext links. When a dead end is reached the search engine works back up the tree until an unused link is found.

Although a notional tree of links is constructed, in reality there is no tree-like hierarchy amongst the Web pages searched and, theoretically, such a strategy allows virtually the entire Web to be searched. If desired, searching can be made more efficient by including a list of URLs or links to pages where it is known that EPG data is located, or to pages which are known to include links to useful EPG pages, and the search engine can be configured to search these first or to search to a limited depth from these predefined pages. Again, the predefined pages can, for example, be manually entered or downloaded from a manually updated source.

An exemplary embodiment of the system includes a user interface for definition of a personal channel scheduled by the user and/or for tailoring or alteration of a predefined or downloaded virtual channel schedule. Figure 5 shows a simple screen display 150 for such a user interface, which allows the user to search the programme database according to user defined criteria and to display programmes matching the criteria, either for immediate showing, or for recording for later viewing, or for scheduling on a personal channel. User interface 150 for capturing the users input and displaying the results, can be a Web-browser extended for TV use, for example in accordance with the recommendations of the Advanced Television Enhancement Forum (ATVEF).

In the example, knobs 152 are used to dial up criteria which appear in display windows 154. Thus a first window may be used to select a genre such as a movie, the second window an associated theme such as "western", a third window, "stars" and a fourth window "John Wayne". A more advanced user interface can also include means to enter key words for word, name, subject, and /or title word searches to allow user for example, to make a request such as "I want to watch gardening programme about heritage tomatoes".

Example search criteria include programme name, star, genre (i.e. programme type such as movie, documentary, news bulletin), theme (e.g. western, comedy, gardening), key words and description, critic's/viewers' ratings, source or broadcast channel (e.g. BBC1), parental guidelines (e.g. "No nudity", or "before 9 p.m."), language.

The system operating software searches the database using standard database query techniques according to the user defined criteria. After the criteria has been dialled-up or entered, a list of programmes and related information (title, time, duration, description etc) appears in window 156 and button 158 can be used for additional searching/programme display. The user may then tailor or alter their personal channel schedule.

The system can also include means to identify a current user of the set top box. In one embodiment this is provided by a login screen where a user name and password must be entered before other elements of the operating system can be accessed. Since the system is aware of the user's identity, the viewing and/or scheduling of programmes can be restricted in accordance with the current user. For example, channel descriptor bar 108 in Figure 3 can be selectable to list channels available to a current user. In an alternative embodiment, only one or a few users need enter a password and all the non-password protected users are subject to viewing/scheduling restrictions. This arrangement allows parental control guidelines to be set by a nominated user, such as the account holder, or other users of the set top box.

Parental control may include or exclude programmes with markings that indicate certain categories, such as nudity, violence, religion, bad language, gambling, alcohol or substance abuse, and all set time constraints, for example, "before 9 p.m.", or "not more than one hour per day or five hours per week". This is achieved by storing data linking a user identity (either a specific named user or a class such as "non-password user") with programme channel and/or descriptor information. If a number of personal channels are shared between a number of users, separate user defined sets of personal channels may also be specified.

The system may also include input means to receive other user information, in addition to user identity information; this may be stored locally or remotely. In particular, the system is capable of receiving preference information characterising a user's preferred programmes. This can be based on information directly entered by a user or on information characterising the user's history of usage of the system, for example, generalisations using AI (Artificial Intelligence) techniques, based upon locally stored viewing statistics. User entered preference information may describe explicit user preferences (for example, "I like westerns") or may be based upon more general information characterising the user, such as their socio-economic class. Preference information can also be derived from "voting", in which the user specifies programmes which have been enjoyed and/or disliked.

The operating software utilises the preference information to automatically generate a personal channel schedule. In one embodiment the user defines a template of variable length slots - for example, a documentary, then a news bulletin, then a movie - with a set of criteria for each slot and any additional constraints - for example news must be at 10 p.m., English language only. For each slot a set of candidate entries is found from the database, and scored, for example using Bayesian combination according to additional criteria and user weightings (for example critics or viewers' ratings) according to its fit to the slot and/or how long ago the same programme was selected. The optimum or top scoring candidate is then chosen for that slot. The Bayesian combination used is the sum of (the rating x the importance of that rating).

Preferences can be adjusted by the user given a positive or negative score for a programme, and as a result adjusting the importance of the selection criteria pro-rata. Additional absolute criteria such as parental controls, can then be applied. A virtual channel can also be constructed by adjusting one or more built-in general profiles chosen according to the required mood - for example, Saturday night viewing, daytime viewing, young person's viewing. A personal channel can be defined by a set of user weightings and selection criteria rather than by an explicit list of programmes and times. In this case a virtual channel can be mapped to a broadcast channel by giving an infinitely high weight to "programme source" term in the set of criteria.

The system software preferably allows a user the option of making a personal channel schedule available for transmission to a remote destination. This allows targeted marketing by a service provider and the exchange of personal channel schedules, either explicitly defined or as preference data sets, to be exchanged between users in different locations, for example between friends and neighbours. Preferably schedule information can be downloaded to a Smart card which the user can then carry around, for example to allow the viewing of preferred personal channels on a hotel television. The Smart card need only carry the user's identity if the user's information is remotely accessible either from a home set top box or from a central database.

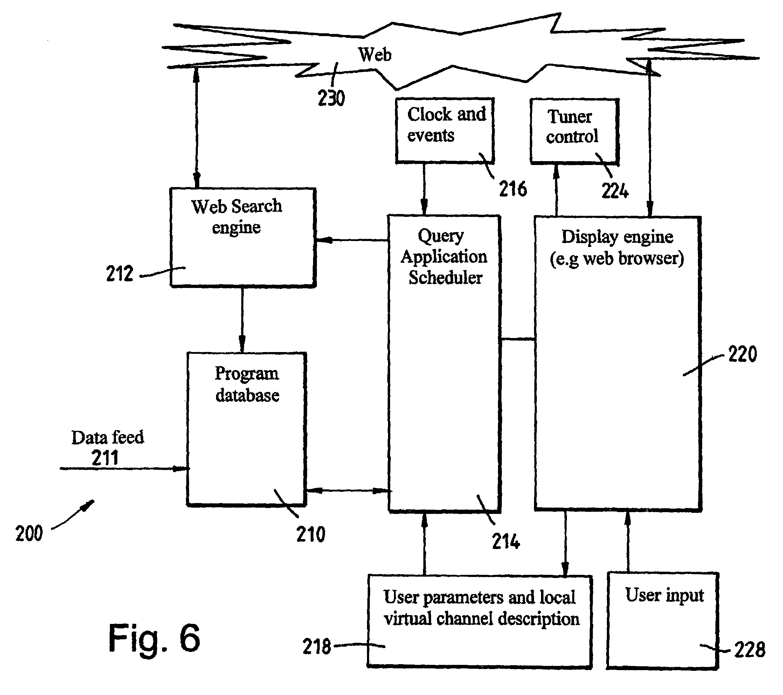

A block diagram 200 illustrating modules of the operating software of the system is shown in Figure 6. Programme database 210 receives data from Web-search engine 214 coupled to World Wide Web (Internet) 230, and also data from data feed 211. Virtual channel scheduling is carried out by scheduler 214, which interacts with programme database 210, and controls Web-search engine 212. This receives inputs from real- time clock and events handling software drivers 216 and user preference information/parameters and virtual channel description data from module 218.

The scheduler 214 also interacts with display engine 220, which controls the display of images on the television, and which preferably incorporates a Web-browser. The display engine interacts with tuner control module 224 to control the programme receiving means to provide programmes to the set top box output. It also receives user input from module 228 for scheduling programmes on a personal channel and for direct control of programmes provided to the television. Optionally a payment management module is also included to manage subscription payments to allow programme choices to be made from subscription channels, and to periodically download billing data for pay-per-view programmes.

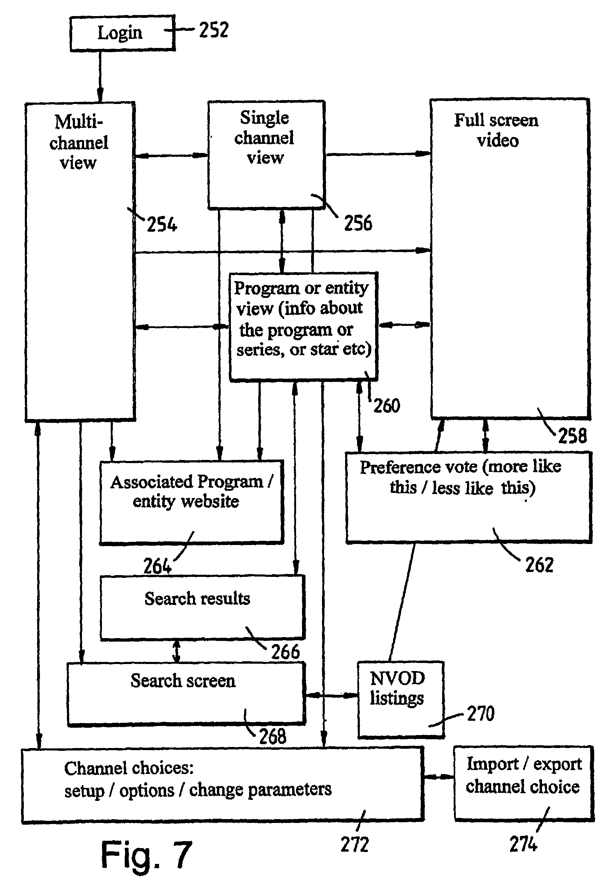

Figure 7 schematically shows elements of a simply exemplary user interface to the system and links between these elements which allow a user to navigate through the displayed menus and screens. The user enters at login screen 252 which, as described above, restricts access to the system. Once the user has successfully logged-on a multi-channel programme display 254 is presented in which the screen is divided into a number of small regions each of which displays a different programme. From this the user may navigate to a single channel view 256 similar to that of Figure 3, in which the user is presented with a single programme in a window on Web page, together with an electronic programme guide providing programme and time information. Selecting the video picture results in full screen video display 258.

From any one of screen displays 254, 256 and 258, additional information about a programme may be displayed - for example, a brief description and critic's comments - in screen view 260. From this screen and from the full screen video display the user can enter preference information and/or vote on screen 262 to indicate that more (or less) programmes of the type displayed are desired.

Associated programmes and/or Web sites providing further information relating to a programme may be accessed from screen 264 via the single 256 and multi-channel 254 view screens and programme information screen 260. Search screen 268 and search results screen 266 may be accessed as illustrated by the links shown, and also from NVOD listings screen 270. Further channel choices, including current user restrictions, user-defined personal channel sets, system set-up options and user parameters may be accessed from screen 272; personal channel schedules may also be defined from this screen, and user and channel data may be imported and exported via screen 274.

A further embodiment of the system-will now be described. In this embodiment a set top box is equipped with software controlled tuning to generate custom programming tailored to the user's own preferences. Although the system is considered as an electronic program guide, a significant aspect of the system is the personalisation of television, giving the user a more interactive experience. In a preferred embodiment the software is substantially entirely contained within a user's local set top box (STB), which has only periodic contact with a server to download schedule data. In an alternative embodiment the system is implemented on both a local PC and a server using a combination of JavaScript and Perl. The server-side Perl scripts represent native applications and allow JavaScript to access data files on the server by using Perl to return the data in the form of a JavaScript library file.

The EPG system runs on a set top box with a capability of including a television window within a HTML page, to display broadcast and locally stored video. The EPG also has the capability to display a message over the television picture to remind or inform the user that a programme in which they are or may be interested is about to start on another channel, and more generally, to provide a reminder or notification feature.

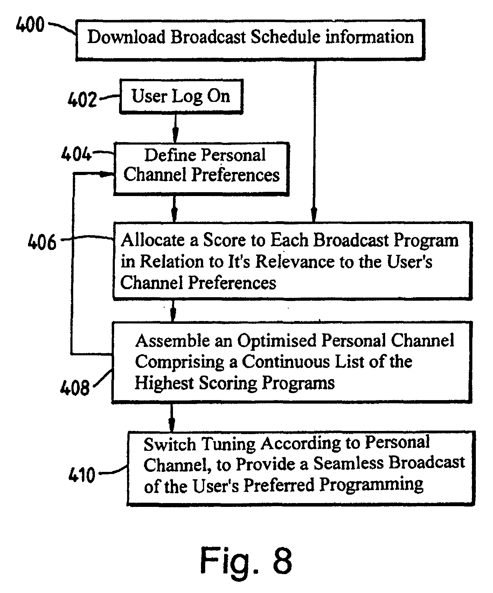

Preferably, the STB has access to several hundred broadcast channels. Figure 8 shows a flowchart illustrating how the system provides a personal channel. At 402 the user is presented with a login screen requesting a name and password, which allows the user to identify themselves to the system. The user is then able, at 404, to set their personal preferences for each personal channel, to define the types of programmes they wish to appear in the channel. Initially, a generalised picture of the channel is built by setting the user's preferences for each of a set of "genres" such as sport, film, science fiction, drama, etc. The preferences are set on a sliding scale from "never" to "always", each position on the scale corresponding to a positive, negative (or zero) value which is then used to score the programmes in a schedule database according to their relevance to the user's preferences.

The system requires a database of broadcast schedule information, which can either be built or which can be downloaded, as at step 400, from a remote source.

A genre comprises a predefined group or set of keywords which in one embodiment are not visible to the user. In many circumstances such a channel definition suffice, for example if all that the user desires is a channel which exclusively shows a particular genre or group of genres. However, it is preferable that a personal channel may be refined by the addition of specific keywords relating to the user's expectations (or by modification of a preset group of keywords). Thus the system preferably allows a user to enter a keyword which is also scored by the user using the sliding scale method. This allows relatively precise definitions to be created, for example, to define a channel which will show only films, favouring those with a romantic theme, but never those with, say Kevin Costner. Alternatively, a simple channel could be defined that shows news and sport and that will always include anything relating to a particular named team.

Once the user's preferences have been defined, in one embodiment every programme in the database is allocated a score based on those settings (step 406). This can be accomplished by accumulating the positive and negative scores for each keyword defined in the channel settings that appears in a programme's details. The schedule database is then sorted in order of the programme scores and the top scoring programmes are assembled to form a seamless listing of the programmes which best fit the user's preferences (step 408).

When the user chooses to view or "tune to" one of their personal channels, control of the television channel tuning is handed to the EPG, which determines which broadcast channel is required for the current programme in the personal channel schedule, and which changes channels accordingly at each programme break (step 410).

The process of defining the user's preferences is advantageously performable interactively with the display of the resulting schedule, allowing the user substantially immediately to see the results of their changes on the programmes which appear in their personal channel.

Once a personal channel has been defined it is saved and appears in the user's programme guide exactly as if it were a broadcast channel. To achieve this, the channel is rebuilt according to the user's stored preferences each time the user logs in.

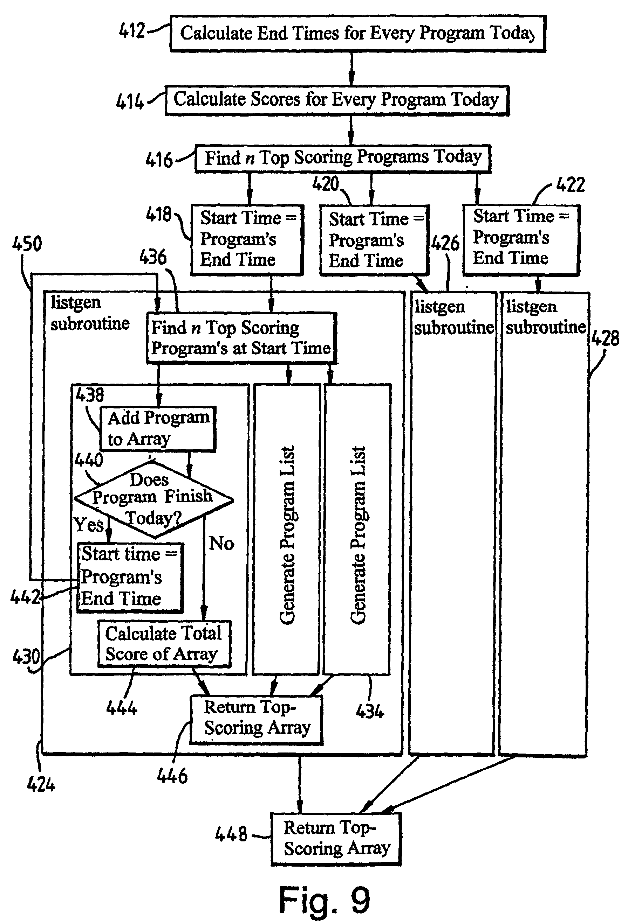

Referring now to Figure 9, this shows an algorithm for constructing a personal channel based upon a user's preferences. As illustrated in Figure 9, a personal channel is constructed using a recursive application, ListGen subroutine 424, which generates an optimised list of programmes starting at a given time. The application can be set to make any number of attempts at generating an ideal personal list or schedule but practical limitations on the software running time mean that this is preferable to impose an upper integer limit, n, representing the number of allowed attempts.

The algorithm aims to ensure that the selected personal schedule contains an optimum distribution of relevant material. To address this, after calculating end times 412 and scores 414 for a day's programming, it locates 416 a selection of n of the most relevant programmes in the database for the chosen day. For each of these programmes the algorithm then locates the n most relevant programmes that start at the end times of the n first selected most relevant programmes. This can be carried out as a single process for, as illustrated by steps 418, 420, 422 and subroutines 424, 426 and 428, with a degree of parallelism. The software then iterates forwards and repeats the process working backwards from the initially selected programmes start times, finding the n most relevant programmes n at the selected programmes start times and then for each of those a further n programmes and so on. In this way, a tree of possible schedule lists is formed. The application then selects the schedule with the highest amount of relevant material as determined by scores of the programmes or by counting programmes with scores within or above threshold value.

The scores are generated based upon the user's preferences, for example by counting the number of keywords in common with a given programme.

For each of the n top scoring programmes identified by step 416 the ListGen subroutine 424 generates an optimised list or schedule. This subroutine accepts start time as an argument, locates the n top scoring programmes at that time (step 436) and for each of those recalls itself (loop 450), sending the programme's end time as the argument, and appends the return value to its listed programme (block 430 and step 438). Each instance of ListGen stops looping when the finishing time of the last programme in its list extends into the next day's viewing (steps 440, 442, 444). It then returns the programme list with the highest total score (step 446). A ListBackGen subroutine is then used for each list to generate an optimised schedule of programmes that terminates at the start time of each of the n programmes. ListBackGen works in an identical fashion to ListGen but accepts end time as its argument. The ListGen result is appended to the ListBackGen result, producing n lists of relevant material (the ListBackGen subroutine is not shown in Figure 9). The lists are compared (steps 446, 448) and list with the highest total score is used as the personal channel's schedule.

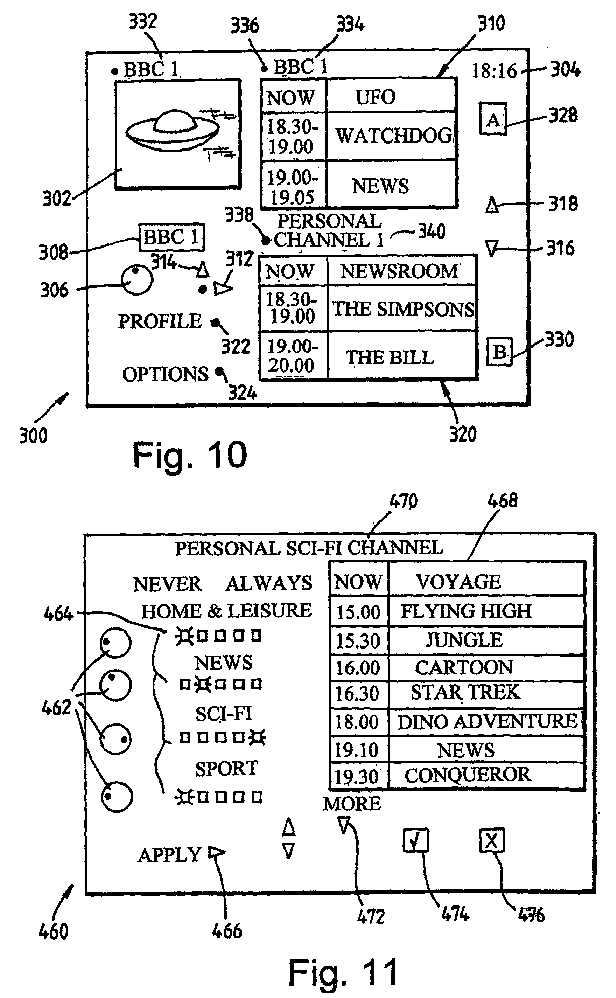

Figure 10 shows a multi-channel view screen 300 of the EPG, which presents a selection of the available channels with the now/next listing 310, 320, for each. The screen has a clock 304 which is used to control all timed functions such as updating the now/next displays.

Each listed channel is displayed under a header bar 334, 340 showing the channel's name and indicating its type (for example, personal channel, fixed virtual channel, broadcast channel), for example by means of an icon (not shown). The header bar also includes select buttons 336, 338 to show more details of a channel schedule and/or to display the channel full screen on the TV. The channel details or channel view screen (not shown) is described in more detail below and allows channel preferences to be accessed.

A TV window 302 is provided to show the channel to which the STB is currently tuned. The name and controls for the current channel are displayed in header 332. Channel selection control 306 is usable to dial up a channel in window 308 which can be displayed in TV window 302 by selecting button 314 and which can be displayed in the schedule listings using button 312. Page-up and page-down 318 and 316 step through schedule listings block at a time and buttons 322 and 324 are used to select user profile and options as described below.

The system is also capable of providing fixed list channel schedules. A fixed list channel is a virtual channel comprising a schedule of material from any available broadcast channels individually chosen by a user, a TV critic, an advertiser, or the like. As with the personal channel the STB automatically re-tunes to each broadcast channel as required, providing the effect of a single channel. When either of buttons 328 and 330 are selected, a predefined fixed list (virtual) channel is downloaded and added to the channel list. This allows the user to view a personalised channel designed by another person, such a TV critic. Additional functions can be provided to allow the user to load a personal channel designed by another person; in this case the EPG loads a set of personalisation parameters and assembles the personal channel accordingly.

A channel view (not shown) is available to provide the user with a more in-depth view of a schedule for a particular channel. Further information on each programme is displayed and, in the case of fixed list and personal channels, the broadcast channel from which the programme is taken is also shown. A switch allows the user to toggle between the schedules for the whole day and an extended now/next display. A control panel controls buttons which take the user back to the multi-channel view of Figure 10, to a search screen and, in the case of a personal channel, to a channel preferences screen, as shown in Figure 11. Referring to Figure 11, this shows a channel preferences screen 460 with a personal channel title 470 and a personal channel schedule 468, more of which can be shown by selecting button 470. The channel preferences screen allows the user to interactively adjust the settings for a personal channel.

The left hand side of the screen contains a bank of controls 460 each allocating the weighting or score of a particular genre or keyword (a genre constituting a predefined collection of keywords, the actual keywords of which are hidden from the user). The user can set the controls to define, by means of a bar chart type display, the degree of preference for a given genre. Genre lists are preferably downloaded with the broadcast schedules, allowing them to be modified and improved by the service provider. A facility may also be provided for the user to define his/her own genres or keywords or add them to those that appear in the channel preferences screen (this option is not shown in Figure 11). The list of settings is navigated in blocks using page-up/page-down type arrow controls.

When adjustments have been made, their effect on the schedule list can be seen by pressing apply button 466, which causes the EPG to generate a new schedule using the updated settings and to display it in window 468. Once the user is satisfied with the schedule the changes are implemented by pressing OK button 474, or alternatively discard it by pressing cancel button 476.

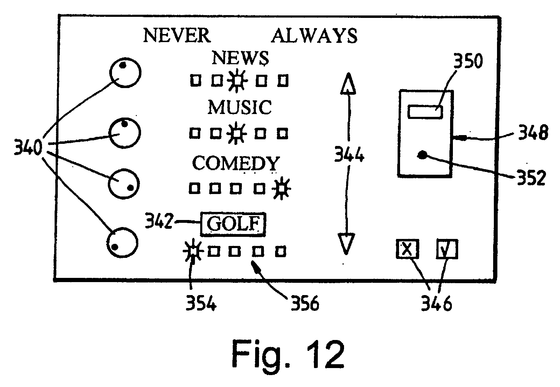

A user profile screen, accessible from multi-channel view screen 300, is shown in Figure 12. The user profile controls the global behaviour of the EPG across all channels and is intended mainly for enforcing parental control, although more generally it is usable to control the display of any type of material across the whole of the EPG. The interface is broadly similar to that of channel preferences screen 460, with rotary controls 340 for selecting, on a sliding scale, user preferences for pre- or user-defined genres and/or keywords. Thus, for example, the keyword "golf" has been entered into window 342 and the corresponding control has been set so that programmes on golf never appear.

Access to the user profile screen is controlled by a parental control lock 348, unlocked by entering a password into window 350 and activating button 352. When locked the user profile settings cannot be changed and a warning is displayed if an attempt is made to change them without first entering a password.

The EPG's response to the user preference settings depends upon whether a setting is positive or negative. Positive settings add extra weight to the selected genre or keyword for all personal channels, when the personal channels are generated. Negative values also affect all personal channels and are in addition applied to fixed list (virtual) and broadcast channels, by blocking access to channels when a programme contains data that is classified as "never".

A user options screen (not shown) provides an option for programme schedules to indicate schedule programmes' relevance to the user profile, to a personal channel, or to the settings for a search (a search is implemented similarly to a user profile and to a channel preference selection). In one embodiment relevance of programmes is indicated by shading in schedule listings so that more relevant programmes stand out better against a background, for example, by shading from light for highly relevant to dark for less relevant.

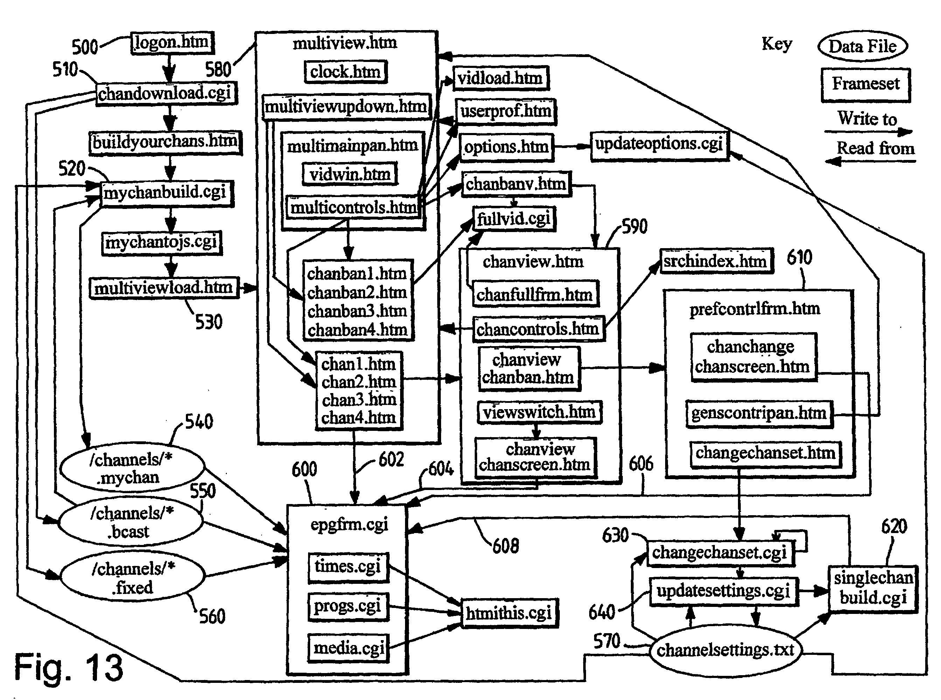

Figure 13 shows a summary of the relationship between files of the EPG system. Referring to the main features of the file structure, the user login at 500 and information on fixed list (virtual) channels and broadcast channels is downloaded at 510 to form data files 560 and 550. Information from these data files is used to build personal channels at step 520, for storage in datafile 540. The multi-channel view screen is then loaded 530 and displayed 580. From the multi-channel view screen the user can access channel view screen 590 and thence channel preferences screen, shown in frame set 610. Personal channel settings are changed at 630 and updated at 540 to build 620 a new personal channel for display and to provide a channel settings datafile 570 which is used for building 520 the personal channels after the user logs in. Personal channel build block 620, multi-channel view frame set 580, channel view frame set 590 and channel preferences frame set 610 all couple to EPG channel schedule display frame set 600 via links 608, 602, 604 and 606 respectively. The EPG display 600 also utilises broadcast 550, fixed 560 and personal 540 channel data files.

The above described personal channel scheduling system can be extended to offer additional facilities. For example, where a programme is broadcast several times during a day, such as is common with NVOD broadcasts, means can be provided to prevent duplication of highly relevant programmes throughout a personal channel. As mentioned above, a search facility operating in a similar way to the "shading by relevance" indication can be provided and a user can be given the option of creating a new personal channel based upon the settings used for the search.

A personal channel that produces consistently interesting viewing is likely to be of interest to other users. All that is needed to produce a personal channel on another STB is to duplicate channel settings, which constitute only a very small quantity of data. Preferably, a fixed, extendible format is defined for personal channel definition to facilitate distribution of personal channel settings between users, for example via e-mail or posting on websites. Such channels are also potentially a marketable commodity, for example they comprises settings favoured by a celebrity. Thus by downloading a personal channel a user can install a channel that "thinks" in the same way as a favourite TV critic, automatically selecting material in a way defined by the critic (or by the celebrity).

A user can be provided with means to indicate how well a given scheduled programme fits their expectations, and the weights of a personal channel can be adjusted according to the goodness of fit. Other programmes for scheduling can also be separately weighted according to any keywords they share with a selected programme which fits well with the user's expectations; in effect this allows a construction of a personal genre definition.

A user can be given the option of weighting programmes according to their popularity with either the general viewing public or with viewers of a similar usage/personality profile to their own. This can be achieved by, for example, storing details of the viewer or user profile on a server linked to a plurality of set top boxes.

By treating existing channels as genre definitions it is possible to set-up an evening's viewing schedule by remapping personal channels into other personal channels. This can provide a schedule such as an hour of programming from a personal news channel, followed by an hour from a personal entertainment channel, followed by something from a personal movie channel. Such a time-based personal channel can be extended to allow different personal channel time-defined "sets" or schedules to be defined on different days of the week or month to reflect differing viewing habits through a week or month or even year.

Advantageously a button is added to each scheduled programme to allow a user to perform one of several functions; to move it to a fixed list (virtual) channel (for example, to add it to tonight's viewing); to create a new personal channel based on keywords associated with the item or programme; to use keywords for the item in a search; and to set up a diary reminder for the item or programme.

As described above, the EPG generates substantially seamless schedules of broadcast material. Such an arrangement can result in a need to fill a gap between two highly relevant programmes with material that is not strictly relevant but fits the gap. In such a situation advantageously a user can be provided with the option to decide what material is used for this "fill-in" purpose. Options include simply leaving a gap in the schedule; fill-in using NVOD material; fill-in using a favourite channel; fill-in using a previously recorded programme, using selection a database of the user's video collection; and fill-in with less relevant material.

Advantageously a multi-user or family mode can be provided for the system to allow the multi-channel view to display personal channels for each member of a family or group of people simultaneously. Preferably, a user has the option of personalising the user interface to change the colour scheme and/or graphics used, to provide a sense of ownership and individuality.

By monitoring a user's user profile and/or channel settings and/or diary items, for example downloading information from the STB to a server as described in connection with weighting according to popularity above, it is possible to build up a personality profile of a user. This can be advantageously used to, for example, target advertising of items of specific interest to the user, either by switching between broadcast channels appropriately or by downloading specific adverts, for example, overnight or together with downloaded schedule information.

Although the device has been described with reference to its use for scheduling television programmes, the system is also suitable for scheduling any type of programme entity, including digital music/audio programmes and computer games. More generally it is suitable for addressing the problems of scheduling any set of programme-type entities given a relatively large number of candidate entities for scheduling.

Many other effective alternatives will occur to those skilled in the art and it is to be understood that the invention is not limited to the described embodiments.

## Claims

1. Apparatus to interface with an entertainment device (74) for providing the entertainment device with a personal channel, the apparatus comprising:
database interface means (46) to communicate with a programme database (76) comprising programme information for a plurality of programmes;
input means (38, 40), to receive preference information characterising an individual user's preferred programmes;
automatic scheduling means (12) coupled to the database interface means to receive the programme information, to operate on the preference information and programme descriptor information to automatically generate schedule information for a personal channel for the user;
control means (12) to control a programme reception device (52, 56, 57, 60) to receive programmes identified by the personal channel schedule; and
output means (72) to provide scheduled programmes thus received to the home entertainment device;
the personal channel comprising a schedule of programmes and corresponding start times, the programmes being selected from programmes available on a plurality of real channels and/or other programme sources;
the personal channel being selectable by a user of the home entertainment device in a similar way to a real programme channel;
the programme database (76) including for each programme the programme start time, a real channel or other programme source the programme is available from at that start time, and programme descriptor information characterising the content of the programme;
the schedule information comprising, for each scheduled programme, programme start time information and information identifying a real channel or other programme source from which the programme is available at that start time;
the control means (12) being configured to control the programme reception device (52, 56, 57, 60) using the personal channel schedule information to select and receive, at the scheduled start time, the real channel or programme source corresponding to the scheduled programme; and
**characterised in that**:
the apparatus further comprises a communication device (46; 56) and means coupled to the communication device to select and download preference information characterising a personal channel schedule of a user of other similar apparatus from a source remote from the apparatus.

2. Apparatus as claimed in claim 1 further comprising means to score programmes based on a user's preference information; means to select a first programme using the results of the scoring and to add this to the schedule; means to identify either earlier adjoining programmes which start after the end of the first programme or later adjoining programmes which finish before the start of the first programme; means to score the adjoining programmes based on the user preference information; means to select a second programme from the adjoining programmes using the results of scoring the adjoining programmes; and means to add the second programme to schedule.

3. Apparatus as claimed in claim 1 or 2, further comprising storage means (28, 32) to store at least one predefined personal channel schedule, modifiable by the scheduling means to provide the automatically generated personal channel schedule.

4. Apparatus as claimed in any one of claims 1 to 3 wherein the input means comprises a user interface for user input of the preference information, the user interface being configured to allow a user to input a preference weighting for each of a plurality of predetermined program descriptors, and further comprising display means (70, 72, 74) to display a personal channel schedule corresponding to the user's preferences, whereby the user is able to interactively define a personal channel.

5. Apparatus as claimed in claim 4 wherein the user interface is further configured for input of preference information comprising information characterising the user's preference for particular selected programmes.

6. Apparatus as claimed in claim 4 or 5
wherein a predetermined program descriptor comprises a set of keywords, and further comprising means to download a set of keywords to the apparatus, in particular
wherein the user interface further comprises means for a user to define a program descriptor and/or keyword.

7. Apparatus as claimed in any one of claims 4 to 6
further comprising user profile input means (40) to define a plurality of user profile descriptors and wherein the user profile descriptors modify the weights of the program descriptors, in particular
wherein the user profile input means comprises access controlled means to block provision by the output means of programmes with keywords or descriptors matching programme blocking keywords or descriptors.

8. Apparatus as claimed in any one of claims 4 to 7
wherein the display means comprises means to display an indication of the degree of relevance of a scheduled programme to a programme descriptor, or, when dependent upon claim 7, to a user profile descriptor.

9. Apparatus as claimed in any one of claims 4 to 8
wherein the user interface is operable to define a search term and
wherein the display means displays programmes in a schedule together with an indication of their degree of relevance to the search term, in particular
wherein the user interface an operable to automatically define the search term dependent upon user selection of a scheduled programme, whereby the displayed schedule indicates other programmes similar to the selected programme.

10. Apparatus as claimed in any one of claims 4 to 6
wherein the user interface is operable to define a user profile and
wherein the display means displays programmes in a schedule together with an indication of their degree of relevance to the user profile.

11. Apparatus as claimed in any one of claims 1 to 10
further comprising fill-in means coupled to the automatic scheduling storage means, to identify and to fill-in periods in the programme channel schedule between programmes with descriptors correlating highly with the user's preferences, the periods according to a user-input preference for fill-in options, the options including an option for a seamless schedule and at least one of no fill-in, near-video-on-demand fill-in, previously recorded fill-in, and favourite channel fill-in.

12. Apparatus as claimed in any preceding claim
wherein the programme database includes programme identification information and wherein the input means is operable by the user to define a search term, and further comprising:
search means to search the programme database to locate a programme with programme descriptor information corresponding to the search term and to display corresponding programme identification information to the user, for scheduling of the located programme, in particular
wherein the preference information includes programme descriptor information for located programmes.

13. Apparatus as claimed in claim 12 wherein the user interface includes means to identify the user, and means to store data linking a user identity with channel and/or programme descriptor information, and wherein the user interface includes means to restrict scheduling of programmes with descriptor information corresponding to descriptor information linked to the current user.

14. Apparatus as claimed in any preceding claim wherein the scheduling means is configured to schedule a plurality of personal channels for a plurality of users wherein associated with a user is a set of one or more personal channels; the user interface further comprising means to select a current user from the plurality of users and means to change between personal channels in the selected current user's set and to restrict the current user's access to others of the plurality of personal channels, in particular
wherein the set of personal channels is user-definable.

15. Apparatus as claimed in any preceding claim wherein the user interface is operable to define a portion of the personal channel schedule to be the same as a corresponding portion of a schedule of a broadcast television channel comprising a plurality of broadcast programmes.

16. Apparatus as claimed in any preceding claim wherein the programme reception device includes means to receive video-on-demand (VOD) and/or near-video-on-demand (NVOD) programmes whereby the real channels include channels available from a VOD and/or an NVOD programme source.

17. Apparatus as claimed in any preceding claim wherein the programme reception device includes means (46, 56) to receive programmes over the Internet whereby the programme sources include Internet programme sources.

18. Apparatus as claimed in any preceding claim including the programme reception device.

19. Apparatus as claimed in any preceding claim further comprising programme storage means (28), coupled to the processing means, to receive broadcast programmes and store them for later playing, whereby the stored programmes are available for the personal channel's schedule of programmes, in particular
wherein the programme storage means is operable to concurrently store a received programme and to play a stored programme.

20. Apparatus as claimed in claim 1 further comprising data input/output means to receive and transmit channel schedule and/or preference information from and to a destination remote from the apparatus, in particular
wherein at least one of the schedule input and schedule output means includes a software interface and a physical interface (36) to a portable data storage device (37) configured for releasable interengagement with the physical interface by a user during normal operation of the apparatus, more particularly
wherein the data storage device comprises a smart card.

21. Apparatus as claimed in any preceding claim wherein the programme database is remote from the apparatus and the interface means comprises a modem.

22. Apparatus as claimed in any preceding claim wherein the entertainment device is a television.

23. A method of providing an entertainment device (74) with a personal channel,
the personal channel comprising a schedule of programmes and corresponding start times, the programmes being selected from programmes available on a plurality of real channels and/or other programme sources, the method comprising:
receiving programme information from a programme database (76) comprising programme information for a plurality of programmes, including for each programme the programme start time, a real channel or other programme source the programme is available from at that start time, and programme descriptor information characterising the content of the programme;
receiving preference information characterising a user's preferred programmes;
operating on the preference information and programme descriptor information to automatically generate schedule information for a personal channel using the programme information, the schedule information comprising, for each scheduled programme, programme start time information and information identifying a real channel or programme source from which the programme is available at that start time;
controlling a programme reception device (52, 56, 57, 60) using the personal channel schedule information to select and receive, at the scheduled start time, the real channel or programme source corresponding to the scheduled programme; and
providing scheduled programmes thus received to the entertainment device such that the personal channel is selectable by a user of the entertainment device in a similar way as a real programme channel;
the method being **characterised by** selecting and downloading preference information for a personal channel schedule of another user from a source remote from the entertainment device.

24. A method as claimed in claim 23 wherein said selecting comprises selecting dependent upon a user's identity.

25. A method as claimed in claim 23 or 24 wherein said remote source comprises a web page.

26. A method as chimed in any one of claims 23 to 25 further comprising simultaneously displaying programme video information and carrying out web-related activities, in particular
comprising displaying electronic programme guide and video information simultaneously using web browser.

27. A method as claimed in any one of claims 23 to 26 wherein the programme database includes programme identification information, the method further comprising defining a search term; searching the database to locate a programme with programme description information corresponding to the search term; displaying programme .. identification information for a located programme; and scheduling the located programme.

28. A method as claimed in any one of claims 23 to 27 further comprising scoring programmes based on user's preference information; selecting a first programme using the results of the scoring and adding this to the schedule; identifying either earlier adjoining programmes which start after the end of the first programme or later adjoining programmes which finish before the start of the first programme; scoring the adjoining programmes based on the user preference information; selecting a second programme from the adjoining programmes using the results of scoring the adjoining programmes; and adding the second programme to the schedule.

29. A method as claimed in any one of claims 23 to 28 wherein the entertainment device is a television.

30. A computer program to, when running, perform the method of any one of claims 23 to 29.

31. A computer readable medium storing the computer program of claim 30.

## Patentansprüche

1. Vorrichtung zur Kopplung mit einer Unterhaltungseinrichtung (74), um die Unterhaltungseinrichtung mit einem persönlichen Kanal zu versehen, wobei die Vorrichtung umfasst:
eine Datenbank-Kopplungseinrichtung (46) zum Kommunizieren mit einer Programmdatenbank (76), die Programminformation für eine Vielzahl von Programmen umfasst;
eine Eingabeeinrichtung (38, 40) zum Empfangen von Präferenzinformation, die bevorzugte Programme eines einzelnen Benutzers charakterisiert;
eine automatische Planungseinrichtung (12), die mit der Datenbank-Kopplungseinrichtung gekoppelt ist, um die Programminformation zu empfangen, um mit der Präferenzinformation und einer Programmbeschreiberinformation zu arbeiten, um automatisch Planungsinformation für einen persönlichen Kanal für den Benutzer zu erzeugen;
eine Steuereinrichtung (12) zum Steuern einer Programmempfangseinrichtung (52, 56, 57, 60), um Programme zu empfangen, die von der Planung des persönlichen Kanals identifiziert werden;
eine Ausgabeeinrichtung (72) zum Bereitstellen von geplanten Programmen, die so an der Privatunterhaltungseinrichtung empfangen werden;
wobei der persönliche Kanal eine Planung von Programmen und entsprechenden Startzeiten umfasst, wobei die Programme aus Programmen, die auf einer Vielzahl von echten Kanälen verfügbar sind, und/oder anderen Programmquellen gewählt werden;
wobei der persönliche Kanal der Privatunterhaltungseinrichtung in einer ähnlichen Weise wie ein echter Programmkanal wählbar ist;
wobei die Programmdatenbank (76) für jedes Programm die Programmstartzeit, einen echten Kanal oder eine andere Programmquelle, von der das Programm zu dieser Startzeit verfügbar ist, und Programmbeschreiberinformation, die den Inhalt des Programms charakterisiert, einschließt;
wobei die Planungsinformation, für jedes geplante Programm, eine Programmstartzeitinformation und eine Information, die einen echten Kanal oder eine andere Programmquelle identifiziert, von dem/der das Programm zu dieser Startzeit verfügbar ist, umfasst;
wobei die Steuereinrichtung (12) konfiguriert ist, um die Programmempfangseinrichtung (52, 56, 57, 60) unter Verwendung der Planungsinformation des persönlichen Kanals zu steuern, um zu der geplanten Startzeit den echten Kanal oder eine Programmquelle entsprechend zu dem geplanten Programm zu wählen und zu empfangen; und
**dadurch gekennzeichnet, dass**:
die Vorrichtung weiter umfasst eine Kommunikationseinrichtung (46; 56) und eine Einrichtung, die mit der Kommunikationseinrichtung zum Wählen und Herunterladen von Präferenzinformation gekoppelt ist, die eine Planung eines persönlichen Kanals eines Benutzers von einer anderen ähnlichen Vorrichtung von einer Quelle, die entfernt von der Vorrichtung ist, charakterisiert.

2. Vorrichtung nach Anspruch 1, ferner umfassend eine Einrichtung zum Bewerten von Programmen auf Grundlage einer Präferenzinformation eines Benutzers; eine Einrichtung zum Wählen eines ersten Programms unter Verwendung der Ergebnisse der Bewertung und zum Hinzufügen davon zu der Planung; eine Einrichtung zum Identifizieren von entweder früher aneinander angrenzenden Programme, die nach dem Ende des ersten Programms starten, oder von später aneinander angrenzenden Programmen, die vor dem Start des ersten Programms enden; eine Einrichtung zum Bewerten der aneinander angrenzenden Programme auf Grundlage der Benutzerpräferenzinformation; eine Einrichtung zum Wählen eines zweiten Programms aus den aneinander angrenzenden Programmen unter Verwendung der Ergebnisse der Bewertung der aneinander angrenzenden Programme; und eine Einrichtung zum Hinzufügen des zweiten Programms zu der Planung.

3. Vorrichtung nach Anspruch 1 oder 2, ferner umfassend eine Speichereinrichtung (28, 32), um wenigstens eine vordefinierte Planung eines persönlichen Kanals zu speichern, die durch die Planungseinrichtung modifizierbar ist, um die automatisch erzeugte Planung des persönlichen Kanals bereitzustellen.

4. Vorrichtung nach irgendeinem der Ansprüche 1 bis 3, wobei die Eingabeeinrichtung eine Benutzerschnittstelle für eine Benutzereingabe der Präferenzinformation umfasst, wobei die Benutzerschnittstelle konfiguriert ist, um einem Benutzer zu erlauben, eine Präferenzgewichtung für jeden einer Vielzahl von vorgegebenen Prograrnmbeschreibern einzugeben, und ferner umfassend eine Anzeigeeinrichtung (70, 72, 74) zum Anzeigen der Planung eines persönlichen Kanals entsprechend zu den Benutzerpräferenzen, wodurch der Benutzer in der Lage ist, interaktiv einen persönlichen Kanal zu definieren.

5. Vorrichtung nach Anspruch 4, wobei die Benutzerschnittstelle ferner konfiguriert ist für eine Eingabe von Präferenzinformation, die eine Information umfasst, die die Benutzerpräferenz für besondere gewählte Programme charakterisiert.

6. Vorrichtung nach Anspruch 4 oder 5,
wobei ein vorgegebener Programmbeschreiber einen Satz von Schlüsselwörtern umfasst, und ferner umfassend eine Einrichtung zum Herunterladen eines Satzes von Schlüsselwörtern an die Vorrichtung insbesondere, wobei die Benutzerschnittstelle ferner eine Einrichtung für einen Benutzer umfasst, um einen Programmbeschreiber und/oder ein Schlüsselwort zu definieren.

7. Vorrichtung nach irgendeinem der Ansprüche 4 bis 6,
ferner umfassend eine Benutzerprofil-Eingabeeinrichtung (40) zum Definieren einer Vielzahl von Benutzerprofil-Beschreibern und wobei die Benutzerprofil-Beschreiber die Gewichtungen der Programmbeschreiber insbesondere modifizieren,
wobei die Benutzerprofil-Eingabeeinrichtung eine zugriffsgesteuerte Einrichtung umfasst, um eine Bereitstellung von Programmen mit Schlüsselwörtern oder Beschreibern, die mit Programmabblockungs-Schlüsselwörtern oder -Beschreibern übereinstimmen, durch die Ausgabeeinrichtung abzublocken.

8. Vorrichtung nach irgendeinem der Ansprüche 4 bis 7,
wobei die Anzeigeeinrichtung eine Einrichtung zum Anzeigen einer Anzeige des Grads einer Relevanz eines geplanten Programms für einen Programmbeschreiber, oder wenn vom Anspruch 7 abhängig, für einen Benutzerprofil-Beschreiber, umfasst.

9. Vorrichtung nach irgendeinem der Ansprüche 4 bis 6,
wobei die Benutzerschnittstelle betreibbar ist, um einen Suchbegriff zu definieren, und
wobei die Anzeigeeinrichtung Programme in einer Planung zusammen mit einer Anzeige von ihrem Grad einer Relevanz zu dem Suchbegriff insbesondere anzeigt,
wobei die Benutzerschnittstelle betreibbar ist, um den Suchbegriff in Abhängigkeit von der Benutzerauswahl eines geplanten Programms automatisch zu definieren, wobei die angezeigte Planung andere Programme anzeigt, die ähnlich zu dem geplanten Programm sind.

10. Vorrichtung nach irgendeinem der Ansprüche 4 bis 6,
wobei die Benutzerschnittstelle betreibbar ist, um ein Benutzerprofil zu definieren, und
wobei die Anzeigeeinrichtung Programme in einer Planung zusammen mit einer Anzeige von deren Grad einer Relevanz für das Benutzerprofil anzeigt.

11. Vorrichtung nach irgendeinem der Ansprüche 1 bis 10,
ferner umfassend eine Einfülleinrichtung, die mit der automatischen Planungsspeichereinrichtung gekoppelt ist, um Perioden in der Programmkanalplanung zwischen Programmen mit Beschreibern, die in einem starken Maß mit Benutzerpräferenzen korrelieren, zu identifizieren und einzufüllen, wobei die Perioden in Übereinstimmung mit einer Benutzereingabepräferenz für Einfülloptionen sind, wobei die Optionen eine Option für eine nahtlose Planung und wenigstens eine einer nicht-Einfüllung, nahezu-Video-bei-Bedarf-Einfüllung, vorher aufgezeichneten Einfüllung, und einer Einfüllung eines bevorzugten Kanals einschließt.

12. Vorrichtung nach irgendeinem vorangehenden Anspruch,
wobei die Programmdatenbank Programmidentifikationsinformation einschließt und wobei die Eingabeeinrichtung durch den Benutzer betreibbar ist, um einen Suchbegriff zu definieren, und ferner umfassend:
eine Sucheinrichtung zum Durchsuchen der Programmdatenbank zum Lokalisieren eines Programms mit einer Programmbeschreiberinformation entsprechend zu dem Suchbegriff und zum Anzeigen einer entsprechenden Programmidentifikationsinformation an den Benutzer, zum Planen insbesondere des lokalisierten Programms,
wobei die Präferenzinformation eine Programmbeschreiberinformation für lokalisierte Programme einschließt.

13. Vorrichtung nach Anspruch 12, wobei die Benutzerschnittstelle eine Einrichtung zum Identifizieren des Benutzers, und eine Einrichtung zum Speichern von Daten, die eine Benutzeridentität mit einer Kanal- und/oder Programmbeschreiberinformation verbindet, einschließt und wobei die Benutzerschnittstelle eine Einrichtung einschließt, um eine Planung von Programmen mit Beschreiberinformation entsprechend zu Beschreiberinformation, die mit dem gegenwärtigen Benutzer verbunden ist, einzuschränken.

14. Vorrichtung nach irgendeinem vorangehenden Anspruch, wobei die Planungseinrichtung konfiguriert ist, um eine Vielzahl von persönlichen Kanälen für eine Vielzahl von Benutzern zu planen, wobei zu einem Benutzer ein Satz von einem oder mehreren persönlichen Kanälen gehört; wobei die Benutzerschnittstelle ferner eine Einrichtung zum Wählen eines gegenwärtigen Benutzers aus der Vielzahl von Benutzern und eine Einrichtung zum Wechseln zwischen persönlichen Kanälen in dem gewählten gegenwärtigen Satz eines Benutzers und zum Beschränken des Zugriffs des gegenwärtigen Benutzers auf andere der Vielzahl von persönlichen Kanälen insbesondere umfasst;
wobei der Satz von persönlichen Kanälen benutzerdefinierbar ist.

15. Vorrichtung nach irgendeinem vorangehenden Anspruch, wobei die Benutzerschnittstelle betreibbar ist, um einen Abschnitt der Planung des persönlichen Kanals zu definieren, so dass er der gleiche wie ein entsprechender Abschnitt einer Planung eines Fernsehsendekanals, der eine Vielzahl von Sendeprogrammen umfasst, ist.

16. Vorrichtung nach irgendeinem vorangehenden Anspruch, wobei die Programmempfangseinrichtung eine Einrichtung zum Empfangen von Video-bei-Bedarf (VOD) und/oder nahezu-Video-bei-Bedarf (NVOD) Programmen, wobei die echten Kanäle Kanäle einschließen, die von einer VOD und/oder einer NVOD Programmquelle erhältlich sind, einschließt.

17. Vorrichtung nach irgendeinem vorangehenden Anspruch, wobei die Programmempfangseinrichtung eine Einrichtung (46, 56) zum Empfangen von Programmen über das Internet einschließt, wodurch die Programmquellen Internet Programmquellen einschließen.

18. Vorrichtung nach irgendeinem vorangehenden Anspruch, einschließend die Programmempfangseinrichtung.

19. Vorrichtung nach irgendeinem vorangehenden Anspruch, ferner umfassend eine Programmspeichereinrichtung (28), die mit der Verarbeitungseinrichtung gekoppelt ist, um Sendeprogramme zu empfangen und sie für eine spätere Abspielung zu speichern, wodurch die gespeicherten Programme für die Planung von Programmen des persönlichen Kanals insbesondere verfügbar sind;
wobei die Programmspeichereinrichtung betreibbar ist, um gleichzeitig ein empfangenes Programm zu speichern und ein gespeichertes Programm abzuspielen.

20. Vorrichtung nach Anspruch 1, ferner umfassend eine Dateneingabe/Ausgabeeinrichtung zum Empfangen und Senden von Kanalplanungsund/oder Präferenzinformation von einer und an eine Zielstelle, die entfernt von der Vorrichtung ist, insbesondere
wobei wenigstens die Planungseingabe- und/oder die Planungsausgabeeinrichtung eine Softwareschnittstelle und eine physikalische Schnittstelle (36) zu einer tragbaren Datenspeichereinrichtung (37) einschließt, die für einen loslösbaren Eingriff mit der physikalischen Schnittstelle durch einen Benutzer während eines normalen Betriebs der Vorrichtung insbesondere konfiguriert ist,
wobei die Datenspeichereinrichtung eine Smartkarte umfasst.

21. Vorrichtung nach irgendeinem vorangehenden Anspruch, wobei die Programmdatenbank entfernt von der Vorrichtung ist und die Schnittstelleneinrichtung ein Modem umfasst.

22. Vorrichtung nach irgendeinem vorangehenden Anspruch, wobei die Unterhaltungseinrichtung ein Fernseher ist.

23. Verfahren, um eine Unterhaltungseinrichtung (74) mit einem persönlichen Kanal zu versehen, wobei der persönliche Kanal eine Planung von Programmen und entsprechenden Startzeiten umfasst, wobei die Programme aus Programmen, die auf einer Vielzahl von echten Kanälen verfügbar sind, und/oder anderen Programmquellen gewählt werden, wobei das Verfahren die folgenden Schritte umfasst:
Empfangen von Programminformation von einer Programmdatenbank (76), die Programminformation für eine Vielzahl von Programmen umfasst, die für jedes Programm die Programmstartzeit, einen echten Kanal oder eine andere Programmquelle, von der das Programm zu dieser Startzeit verfügbar ist, und eine Programmbeschreiberinformation, die den Inhalt des Programms charakterisiert, einschließt;
Empfangen einer Präferenzinformation, die bevorzugte Programme eines Benutzers charakterisiert;
Arbeiten mit der Präferenzinformation und der Programmbeschreiberinformation zur automatischen Erzeugung einer Planungsinformation für einen persönlichen Kanal unter Verwendung der Programminformation, wobei die Planungsinformation, für jedes geplante Programm, eine Programmstartzeitinformation und eine Information, die einen echten Kanal oder eine echte Programmquelle identifiziert, von der das Programm zu dieser Startzeit verfügbar ist, umfasst;
Steuern einer Programmempfangseinrichtung (52, 56, 57, 60) unter Verwendung der Planungsinformation des persönlichen Kanals, um zu der geplanten Startzeit den echten Kanal oder die Programmquelle entsprechend zu dem geplanten Programm zu wählen und zu empfangen;
Bereitstellen von geplanten Programmen, die so empfangen werden, an der Unterhaltungseinrichtung derart, dass der persönliche Kanal durch einen Benutzer der Unterhaltungseinrichtung in einer ähnlichen Weise wie ein echter Programmkanal wählbar ist;
wobei das Verfahren **gekennzeichnet ist durch** Wählen und Herunterladen von Präferenzinformation für eine Planung eines persönlichen Kanals eines anderen Benutzers von einer Quelle, die von der Unterhaltungseinrichtung entfernt ist.

24. Verfahren nach Anspruch 23, wobei das Wählen ein Wählen in Abhängigkeit von einer Benutzeridentität umfasst.

25. Verfahren nach Anspruch 23 oder 24, wobei die entfernte Quelle eine Web-Seite umfasst.

26. Verfahren nach irgendeinem der Ansprüche 23 bis 25, ferner umfassend ein gleichzeitiges Anzeigen von Programmvideoinformation und eines Ausführens von Web bezogenen Aktivitäten insbesondere,
umfassend das Anzeigen von elektronischer Programmführungsinformation und Videoinformation gleichzeitig unter Verwendung eines Web Browsers.

27. Verfahren nach irgendeinem der Ansprüche 23 bis 26, wobei die Programmdatenbank eine Programm-Identifikationsinformation einschließt, wobei das Verfahren ferner die folgenden Schritte umfasst: Definieren eines Suchbegriffs; Durchsuchen der Datenbank zum Lokalisieren eines Programms mit einer Programm-Beschreiberinformation entsprechend zu dem Suchbegriff; Anzeigen von Programmidentifikationsinformation für ein lokalisiertes Programm; und Planen des lokalisierten Programms.

28. Verfahren nach irgendeinem der Ansprüche 23 bis 27, ferner umfassend die folgenden Schritte: Bewerten von Programmen auf Grundlage von Präferenzinformation der Benutzer; Wählen eines ersten Programms unter Verwendung der Ergebnisse der Bewertung und Hinzufügung davon zu der Planung; Identifizieren entweder von früheren aneinander angrenzenden Programmen, die nach dem Ende des ersten Programms starten, oder von späteren aneinander angrenzenden Programmen, die vor dem Start des ersten Programms enden; Bewerten der aneinander angrenzenden Programmen auf Grundlage der Benutzerpräferenzinformation; Wählen eines zweiten Programms aus den aneinander angrenzenden Programmen unter Verwendung der Ergebnisse der Bewertung der aneinander angrenzenden Programmen; und Hinzufügen des zweiten Programms zu der Planung.

29. Verfahren nach irgendeinem der Ansprüche 23 bis 28, wobei die Unterhaltungseinrichtung ein Fernseher ist.

30. Computerprogramm, um dann, wenn es abläuft, das Verfahren von irgendeinem der Ansprüche 23 bis 29 auszuführen.

31. Computerlesbares Medium, das das Computerprogramm des Anspruchs 30 speichert.

## Revendications

1. Appareil pour réaliser une interface avec un dispositif de loisir (74) pour munir le dispositif de loisir d'un canal personnel, l'appareil comprenant:
un moyen d'interface de base de données (46) pour communiquer avec une base de données de programmes (76) comprenant une information de programme pour une pluralité de programmes;
un moyen d'entrée (38, 40) pour recevoir une information de préférence qui caractérise un programme préféré d'utilisateur individuel;
un moyen de planification automatique (12) qui est couplé au moyen d'interface de base de données pour recevoir l'information de programme, pour opérer sur l'information de préférence et sur une information de descripteur de programme afin de générer de manière automatique une information de planification pour un canal personnel pour l'utilisateur;
un moyen de commande (12) pour commander un dispositif de réception de programme (52, 56, 57, 60) pour recevoir des programmes identifiés par la planification de canal personnel; et
un moyen de sortie (72) pour appliquer des programmes planifiés ainsi reçus sur le dispositif de loisir domestique,
le canal personnel comprenant une planification de programmes et de temps de début correspondants, les programmes étant sélectionnés parmi des programmes disponibles sur une pluralité de canaux réels et/ou sur d'autres sources de programme;
le canal personnel pouvant être sélectionné par un utilisateur du dispositif de loisir domestique d'une façon similaire à un canal de programme réel;
la base de données de programme (76) incluant, pour chaque programme, le temps de début de programme, un canal réel ou une autre source de programme à partir duquel ou de laquelle le programme est disponible à ce temps de début et une information de descripteur de programme qui caractérise le contenu du programme;
l'information de planification comprenant, pour chaque programme planifié, une information de début de programme et une information qui identifie un canal réel ou une autre source de programme à partir duquel ou de laquelle le programme est disponible à ce temps de début;
le moyen de commande (12) étant configuré pour commander le dispositif de réception de programme (52, 56, 57, 60) en utilisant l'information de planification de canal personnel pour sélectionner et recevoir, au temps de début planifié, le canal réel ou la source de programme correspondant au programme planifié; et
**caractérisé en ce que**:
l'appareil comprend en outre un dispositif de communication (46; 56) et un moyen qui est couplé au dispositif de communication pour sélectionner et décharger une information de préférence qui caractérise une planification de canal personnel d'un utilisateur d'un autre appareil similaire depuis une source à distance de l'appareil.

2. Appareil selon la revendication 1, comprenant en outre un moyen pour octroyer un score à des programmes sur la base d'une information de préférence d'utilisateur; un moyen pour sélectionner un premier programme en utilisant les résultats de l'action consistant à octroyer un score et pour additionner celui-ci à la planification; un moyen pour identifier soit des programmes contigus plus tôt qui démarrent après la fin du premier programme, soit des programmes contigus plus tard qui se terminent avant le début du premier programme; un moyen pour octroyer un score aux programmes contigus sur la base de l'information de préférence d'utilisateur; un moyen pour sélectionner un second programme à partir des programmes contigus en utilisant les résultats d'octroi de score aux programmes contigus; et un moyen pour additionner le second programme à la planification.

3. Appareil selon la revendication 1 ou 2, comprenant en outre un moyen de stockage (28, 32) pour stocker au moins une planification de canal personnel prédéfinie, modifiable par le moyen de planification afin de produire la planification de canal personnel générée de manière automatique.

4. Appareil selon l'une quelconques des revendications 1 à 3, dans lequel le moyen d'entrée comprend une interface d'utilisateur pour une entrée par l'utilisateur d'une information de préférence, l'interface d'utilisateur étant configurée pour permettre à un utilisateur d'entrer une pondération de préférence pour chacun d'une pluralité de descripteurs de programme prédéterminés, et comprenant en outre un moyen d'affichage (70, 72, 74) pour afficher une planification de canal personnel correspondant aux préférences d'utilisateur et ainsi, l'utilisateur peut définir de manière interactive un canal personnel.

5. Appareil selon la revendication 4, dans lequel l'interface d'utilisateur est en outre configurée pour entrer une information de préférence comprenant une information qui caractérise la préférence d'utilisateur pour des programmes sélectionnés particuliers.

6. Appareil selon la revendication 4 ou 5, dans lequel un descripteur de programme prédéterminé comprend un jeu de mots clés, et comprenant en outre un moyen pour décharger un jeu de mots clés sur l'appareil, en particulier
dans lequel l'interface d'utilisateur comprend en outre un moyen pour qu'un utilisateur définisse un descripteur de programme et/ou un mot clé.

7. Appareil selon l'une quelconque des revendications 4 à 6, comprenant en outre un moyen d'entrée de profil d'utilisateur (40) pour définir une pluralité de descripteurs de profil d'utilisateur et dans lequel les descripteurs de profil d'utilisateur modifient les poids des descripteurs de programme, en particulier
dans lequel le moyen d'entrée de profil d'utilisateur comprend un moyen d'accès commandé pour bloquer la fourniture, par le moyen de sortie, des programmes avec des mots clés ou des descripteurs correspondant à des mots clés ou à des descripteurs de blocage de programme.

8. Appareil selon l'une quelconque des revendications 4 à 7, dans lequel le moyen d'affichage comprend un moyen pour afficher une indication du degré de pertinence d'un programme planifié vis-à-vis d'un descripteur de programme ou, lorsque la revendication dépend de la revendication 7, vis-à-vis d'un descripteur de profil d'utilisateur.

9. Appareil selon l'une quelconque des revendications 4 à 8, dans lequel une interface d'utilisateur peut fonctionner pour définir un terme de recherche et
dans lequel le moyen d'affichage affiche des programmes dans une planification en association avec une indication de leur degré de pertinence vis-à-vis du terme de recherche, en particulier
dans lequel l'interface d'utilisateur peut fonctionner pour définir de manière automatique le terme de recherche en fonction d'une sélection par l'utilisateur d'un programme planifié et ainsi, la planification affichée indique d'autres programmes similaires au programme sélectionné.

10. Appareil selon l'une quelconque des revendications 4 à 6, dans lequel l'interface d'utilisateur peut fonctionner pour définir un profil d'utilisateur et
dans lequel le moyen d'affichage affiche des programmes dans une planification en association avec une indication de leur degré de pertinence vis-à-vis du profil d'utilisateur.

11. Appareil selon l'une quelconque des revendications 1 à 10, comprenant en outre un moyen de remplissage qui est couplé au moyen de stockage de planification automatique pour identifier et pour remplir des périodes dans la planification de canal de programme entre des programmes avec des descripteurs présentant une corrélation élevée avec des préférences d'utilisateur, les périodes étant conformément à une préférence d'entrée d'utilisateur pour des options de remplissage, les options incluant une option pour une planification sans couture et au moins une option prise parmi pas de remplissage, un remplissage de quasi-vidéo à la demande, un remplissage enregistré au préalable et un remplissage de canal favori.

12. Appareil selon l'une quelconque des revendications précédentes, dans lequel la base de données de programmes inclut une information d'identification de programme et dans lequel le moyen d'entrée peut être actionné par l'utilisateur pour définir un terme de recherche, et comprenant en outre
un moyen de recherche pour effectuer une recherche dans la base de données de programmes pour localiser un programme dont une information de descripteur de programme correspond au terme de recherche et pour afficher une information d'identification de programme correspondante pour l'utilisateur, pour la planification du programme localisé, en particulier
dans lequel l'information de préférence inclut une information de descripteur de programme pour les programmes localisés.

13. Appareil selon la revendication 12, dans lequel l'interface d'utilisateur inclut un moyen pour identifier l'utilisateur et un moyen pour stocker des données liant une identité d'utilisateur avec une information de descripteur de canal et/ou de programme et dans lequel l'interface d'utilisateur inclut un moyen pour limiter la planification de programmes avec une information de descripteur correspondant à une information de descripteur liée à l'utilisateur courant.

14. Appareil selon l'une quelconque des revendications précédentes, dans lequel le moyen de planification est configuré pour planifier une pluralité de canaux personnels pour une pluralité d'utilisateurs, dans lequel un jeu d'un ou de plusieurs canaux personnels est associé à un utilisateur; l'interface d'utilisateur comprenant en outre un moyen permettant de sélectionner un utilisateur courant parmi la pluralité d'utilisateurs et un moyen pour effectuer une modification entre des canaux personnels pour l'utilisateur courant sélectionné établi et pour limiter l'accès par l'utilisateur courant à d'autres de la pluralité de canaux personnels, en particulier le jeu de canaux personnels peut être défini par l'utilisateur.

15. Appareil selon l'une quelconque des revendications précédentes, dans lequel l'interface d'utilisateur peut fonctionner pour définir une partie de la planification de canal personnel de telle sorte qu'elle soit la même qu'une partie correspondante d'une planification d'un canal de télévision de diffusion comprenant une pluralité de programmes de diffusion.

16. Appareil selon l'une quelconque des revendications précédentes, dans lequel le dispositif de réception de programme inclut un moyen pour recevoir des programmes de vidéo à la demande (VOD) et/ou de quasi-vidéo à la demande (NVOD) et ainsi, les canaux réels incluent des canaux disponibles à partir d'une source de programme (VOD et/ou NVOD).

17. Appareil selon l'une quelconque des revendications précédentes, dans lequel le dispositif de réception de programme inclut un moyen (46, 56) pour recevoir des programmes sur l'Internet et ainsi, les sources de programme incluent des sources de programme de l'Internet.

18. Appareil selon l'une quelconque des revendications précédentes, incluant le dispositif de réception de programme.

19. Appareil selon l'une quelconque des revendications précédentes, comprenant en outre un moyen de stockage de programme (28), qui est couplé au moyen de traitement, pour recevoir des programmes de diffusion et pour les stocker pour une lecture ultérieure et ainsi, les programmes stockés sont disponibles pour la planification de programmes de canal personnel, en particulier
dans lequel le moyen de stockage de programme peut fonctionner de façon concurrente pour stocker un programme reçu et pour lire un programme stocké.

20. Appareil selon la revendication 1, comprenant en outre un moyen d'entrée/sortie de données pour recevoir et transmettre une planification et/ou une information de préférence depuis et sur une destination à distance de l'appareil, en particulier
dans lequel au moins un moyen pris parmi le moyen d'entrée de planification et le moyen de sortie de planification inclut une interface logique et une interface physique (36) sur un dispositif de stockage de données portable (37) configuré pour une inter-coopération libérable avec l'interface physique par un utilisateur pendant un fonctionnement normal de l'appareil, de façon davantage particulière
dans lequel le dispositif de stockage de données comprend une carte à puce.

21. Appareil selon l'une quelconque des revendications précédentes, dans lequel la base de données de programmes est à distance de l'appareil et le moyen d'interface comprend un modem.

22. Appareil selon l'une quelconque des revendications précédentes, dans lequel le dispositif de loisir est une télévision.

23. Procédé consistant à munir un dispositif de loisir (74) d'un canal personnel, le canal personnel comprenant une planification de programmes et de temps de début correspondants, les programmes étant sélectionnés à partir de programmes qui sont disponibles sur une pluralité de canaux réels et/ou sur d'autres sources de programme, le procédé comprenant:
la réception d'une information de programme à partir d'une base de données de programmes (76) comprenant une information de programme pour une pluralité de programmes, incluant, pour chaque programme, le temps de début de programme, un canal réel ou une autre source de programme à partir duquel ou de laquelle le programme est disponible à ce temps de début et une information de descripteur de programme qui caractérise le contenu du programme;
la réception d'une information de préférence qui caractérise des programmes préférés d'utilisateur;
l'action consistant à opérer sur l'information de préférence et sur l'information de descripteur de programme de manière à générer de façon automatique l'information de planification pour un canal personnel en utilisant l'information de programme, l'information de planification comprenant, pour chaque programme planifié, une information de temps de début de programme et une information qui identifie un canal réel ou une source de programme à partir duquel ou de laquelle le programme est disponible à ce temps de début;
la commande d'un dispositif de réception de programme (52, 56, 57, 60) en utilisant l'information de planification de canal personnel pour sélectionner et recevoir, au temps de début planifié, le canal réel ou la source de programme correspondant au programme planifié; et
l'application de programmes planifiés ainsi reçus sur le dispositif de loisir de telle sorte que le canal personnel puisse être sélectionné par un utilisateur du dispositif de loisir d'une façon similaire à un canal de programme réel,
le procédé étant **caractérisé par** la sélection et le déchargement d'une information de préférence pour une planification de canal personnel d'un autre utilisateur depuis une source à distance du dispositif de loisir.

24. Procédé selon la revendication 23, dans lequel la sélection comprend une sélection en fonction d'une identité d'utilisateur.

25. Procédé selon la revendication 23 ou 24, dans lequel ladite source à distance comprend une page Web.

26. Procédé selon l'une quelconque des revendications 23 à 25, comprenant en outre, de façon simultanée, l'affichage d'une information vidéo de programme et la mise en oeuvre d'une activité rapportée au Web, en particulier comprenant l'affichage d'un guide de programme électronique et d'une information vidéo de façon simultanée en utilisant un navigateur Web.

27. Procédé selon l'une quelconque des revendications 23 à 26, dans lequel la base de données de programmes inclut une information d'identification de programme, le procédé comprenant en outre la définition d'un terme de recherche; la recherche dans la base de données pour localiser un programme avec une information de description de programme correspondant au terme de recherche; l'affichage de l'information d'identification de programme pour un programme localisé; et la planification du programme localisé.

28. Procédé selon l'une quelconque des revendications 23 à 27, comprenant en outre l'action consistant à octroyer un score à des programmes sur la base d'une information de préférence d'utilisateur; la sélection d'un premier programme en utilisant les résultats de l'octroi de score et l'addition de celui-ci à la planification; l'identification de soit des programmes contigus plus tôt qui démarrent après la fin du premier programme, soit de programmes contigus plus tard, qui se terminent avant le début du premier programme; l'action consistant à octroyer des scores aux programmes contigus sur la base de l'information de préférence d'utilisateur; la sélection d'un second programme à partir des programmes contigus en utilisant les résultats de score des programmes contigus; et l'addition des seconds programmes à la planification.

29. Procédé selon l'une quelconque des revendications 23 à 28, dans lequel le dispositif de loisir est une télévision.

30. Programme d'ordinateur pour, lorsqu'il est déroulé, mettre en oeuvre le procédé selon l'une quelconque des revendications 23 à 29.

31. Support d'information lisible par ordinateur qui stocke le programme d'ordinateur de la revendication 30.
